(19) Europäisches Patentamt / European Patent Office / Office européen des brevets

(11) **EP 3 452 522 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **17718030.4**

(22) Anmeldetag: **06.04.2017**

(51) Internationale Patentklassifikation (IPC):
***C08F 120/32*** (2006.01) ***C09J 133/14*** (2006.01)
***C08L 75/04*** (2006.01) ***C09J 7/38*** (2018.01)

(52) Gemeinsame Patentklassifikation (CPC):
(C-Sets verfügbar)
**C08F 120/32; C08L 75/04; C09J 133/068** (Forts.)

(86) Internationale Anmeldenummer:
**PCT/EP2017/058295**

(87) Internationale Veröffentlichungsnummer:
**WO 2017/190911 (09.11.2017 Gazette 2017/45)**

(54) **FUNKTIONALISIERTE (CO)POLYMERE FÜR KLEBESYSTEME**

FUNCTIONALIZED (CO)POLYMERS FOR ADHESIVE SYSTEMS

COPOLYMÈRES FONCTIONNALISÉS POUR SYSTÈMES ADHÉSIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2016 DE 102016207550**

(43) Veröffentlichungstag der Anmeldung:
**13.03.2019 Patentblatt 2019/11**

(73) Patentinhaber: **tesa SE**
**22848 Norderstedt (DE)**

(72) Erfinder:
- **DOLLASE, Thilo**
  **22397 Hamburg (DE)**
- **BRODBECK, Markus**
  **72555 Metzingen (DE)**
- **FISCHER, Alexander**
  **22303 Hamburg (DE)**
- **KUPSKY, Marco**
  **25451 Quickborn (DE)**
- **PRENZEL, Alexander**
  **22529 Hamburg (DE)**

(74) Vertreter: **tesa SE**
**Hugo-Kirchberg-Straße 1**
**22848 Norderstedt (DE)**

(56) Entgegenhaltungen:
**EP-A1- 0 542 273**
**EP-A1- 2 261 737**
**WO-A1-2015/030060**
**US-A1- 2002 185 222**
**US-A1- 2007 041 698**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C09J 133/068, C08L 75/04**

## Beschreibung

Die Erfindung betrifft epoxidfunktionierte Poly(meth)acerylate, die insbesondere zur Verwendung als oder als Komponente für Klebemassen einsetzbar sind.

### *Hintergrund*

Klebebänder werden heute in vielfältiger Form als Hilfsmittel in Prozessen und zum Verbinden verschiedener Objekte verwendet. Selbstklebebänder, die Haftklebemassen enthalten, weisen dabei permanente Klebrigkeit auf. Sie können ohne weitere Härtung üblicherweise unmittelbar nach Verklebung ihre Verbindungsaufgabe ausüben. Mit solchen Selbstklebebändern sind mitunter sehr hohe Verklebungsfestigkeiten realisierbar. Trotzdem besteht in bestimmten Anwendungen der Bedarf nach Klebelösungen, die noch höhere Verklebungsfestigkeiten erlauben. Viele solcher Klebesysteme werden in einem Heißverpressschritt appliziert. Sie Schmelzen dann auf, benetzen den Verklebungsuntergrund und bauen während des Abkühlens durch Erstarrung Festigkeit auf. Solche Klebesysteme können zudem noch chemische Reaktivität aufweisen. Manche heißverpressbaren Klebesysteme, die in Klebebandform zur Anwendung kommen, zeigen unter Heißpressbedingungen ein unerwünschtes Ausquetschen ("Oozing"), da mit der Temperatur die Schmelzviskosität sinkt bzw. durch temperaturbedingten Kohäsionsverlust das Klebesystem fließfähig wird. Bei Flüssigklebesystemen stellt sich das Problem des Ausquetschens bereits bei Raumtemperatur. Im Verklebungsprozess ist dagegen ein gutes Auffließverhalten auf die zu verklebenden Substrate erforderlich, um eine optimale Kontaktfläche der Klebeschicht zu erreichen. Dies erfordert ein gewisses Fließverhalten des Klebesystems unter Verpressbedingungen.

Unter dem Begriff "Ausquetschen" oder auch "Oozing" (Test A) ist im Sinne dieser Erfindung ein seitliches Austreten der nicht ausgehärteten oder nicht ausreichend ausgehärteten Klebemasse aus einer Klebschicht oder einem Klebeverbund zu verstehen. Dies kann als kalter Fluss und/oder unter Druck und/oder bei erhöhter Temperatur geschehen und ist nicht erwünscht.

Bei Reaktivklebebändern besteht zudem der Bedarf, dass sich die Klebesysteme schnell verarbeiten lassen und zwar im Hinblick auf die Aktivierungsdauer für die Initiierung der Härtungsreaktion. Neben der Aktivierung soll auch die Aushärtung bis zum gewünschten Härtungsgrad schnell ablaufen. Ein besonders vorteilhaftes Reaktivsystem in diesem Zusammenhang basiert auf Epoxiden.

Härtbare Klebesysteme auf Epoxidbasis, die in Form von Klebebändern zum Einsatz kommen, enthalten oft eine Filmbildnerkomponente, wobei es sich um ein thermoplastisches Polymer, ein Elastomer oder ein thermoplastisches Elastomer handeln kann, und eine Reaktivkomponente häufig bestehend aus einem Reaktivharz, in diesen Fällen Epoxidbasierend, und einem Härtersystem (auch als Aktivatorsystem oder Initiatorsystem bezeichnet). Beispiele sind in EP 1 028 151 B1 (Poly(meth)acrylat / niedermolekulares Epoxidharz), EP 620 259 A1 (Polyester / niedermolekulares Epoxidharz), EP 721 975 (Polyolefin / niedermolekulares Epoxidharz) und DE 195 19 499 A1 (thermoplastisches Polyurethan / niedermolekulares Epoxidharz) zu finden.

Unter dem Begriff "härtbares Polymer" "härtbare Klebemasse" oder "härtbares Klebesystem" ist im Sinne dieser Erfindung ein Polymer oder eine Zubereitung zu verstehen, das bzw. die funktionelle Gruppen enthält, die durch Einwirkung einer Härterkomponente in Kombination mit erhöhter Temperatur und/oder Strahlung (insbesondere UV-Strahlung) als zusätzlichem Stimulus an einer Reaktion teilnehmen können, die zu einem Molmassenaufbau und/oder einer Quervernetzung des Polymers oder zumindest eines Zubereitungsbestandteils führt.

Die Begriffe "Härter", "Initiator", "Aktivator" sind im Sinne dieser Erfindung synonym verwendet. Sie beschreiben Substanzen oder Substanzgemische, die eine Härtungsreaktion unter Beteiligung von Epoxid-Funktionalitäten in Kombination mit erhöhter Temperatur und/oder Strahlung (insbesondere UV-Strahlung) herbeiführen können.

Außerdem besteht bei härtbaren Klebesystemen, die in Form von Reaktivklebebändern zum Einsatz kommen sollen, üblicherweise die Notwendigkeit, eine ausreichende Lagerstabilität unter Lagerbedingungen zu gewährleisten, so dass das Reaktivklebeband auf unkomplizierte Weise transportiert und bevorratet werden kann, bevor die eigentliche Reaktivität dann erst im Aktivierungsschritt und unter Aktivierungsbedingungen zu Tage tritt / treten soll. Ohne solche Latenz ist die Praktikabilität genannter Klebebänder eingeschränkt.

In diesen und anderen Fällen eignen sich insbesondere kationisch härtende Epoxid-Systeme und hier vor allem solche auf Basis (cyclo)aliphatischer Epoxide, die durch Aktivierung mittels eines säurebildenden Initiators entweder thermisch ("Thermal Acid Generator", TAG) und/oder unter Einwirkung ultravioletter Strahlung ("Photo Acid Generator", PAG) reagieren. (Cyclo)aliphatische Epoxide lassen sich mit diesen Initiatoren effizienter Härten als Glycidylether (J. V. Crivello, J. Polym. Sci. A Polym. Chem., 1999, 37, 4241-54). Für die Formulierung basierend auf (cyclo)aliphatischen Epoxiden, die sich für eine derartige Aktivierung besonders eignen, steht dem Fachmann allerdings bei weitem nicht ein solcher Reichtum an verschiedenen Reaktivharzen zur Verfügung wie bei Glycidylether-basierenden Reaktivharzen. Die verfügbaren Reaktivharze auf Basis (cyclo)aliphatischer Epoxide liegen darüber hinaus niedermolekular vor, was zum Problem des Ausquetschens unter Heißverpressbedingungen oder je nach Formulierung zum Teil sogar bei Raumtemperatur führen kann, da die noch nicht umgesetzten niedermolekularen Reaktivharze als Weichmacher fungieren. Es werden daher Reaktivharze für Klebesysteme gesucht insbesondere für solche in Filmform, die die beschriebenen Nachteile nicht oder in reduzierter Form aufweisen.

***Stand der Technik***

WO 98/21287 A1 beschreibt durch Strahlung härtbare Vorstufen für thermisch härtbare Klebesysteme enthaltend (a) einen strahlenhärtbaren Monomer-/Präpolymersirup, der vor allem als Poly(meth)acrylat-Komponente zu verstehen ist, (b) eine Epoxidharzkomponente, (c) eine Photoinitiatorkomponente und (d) einen nukleophilen thermischen Aktivator. Oligomere und polymere Epoxide können als Komponente (b) zum Einsatz kommen. Mit cycloaliphatischen Epoxiden funktionalisierte (Co)Polymere werden nicht explizit genannt. Cycloaliphatische Epoxide werden sogar grundsätzlich als wenig vorteilhaft beschrieben, siehe Seite 19, Zeile 2 der betreffenden Schrift. Härtung mittels TAG oder PAG ist nicht vorgesehen.

US 4,552,604 A ist ein weiteres Beispiel für ein sogenanntes "dual cure" System, bei dem ein Poly(meth)acrylat durch Photopolymerisation unter Beisein eines Epoxid-Harzes aufgebaut wird. Die Photopolymerisation der flüssigen Zusammensetzung erfolgt auf einem Liner. Der photopolymerisierte Film wird für die Verklebung schließlich thermisch zur Härtung gebracht. Die Photopolymerisation wird genutzt, um eine polymere Matrix für die thermisch härtbare Epoxidkomponente zu bilden. Die Härtung mit Supersäure bildenden Initiatoren wird nicht genannt.

EP 2 545 132 A1 offenbart einen photohärtbaren Haftklebestoff, der auf einem Polyacrylat basiert. Das Polyacrylat enthält zu einem geringen Anteil ein Epoxid-funktionalisiertes Comonomer, über das die Vernetzung des Haftklebstoffs erfolgen kann. Der Anteil an Epoxidfunktionalisiertem Comonomer ist sehr gering, so dass über die beschriebenen Copolymere ohne weiteres keine Reaktivklebebänder mit Verklebungsfestigkeiten deutlich oberhalb der durch Haftklebemassen erhalten werden können.

EP 819 746 A1 beschreibt härtbare Klebefolien, deren Formulierung ein hochmolekulares Polyacrylat, eine photopolymerisierbare Epoxidkomponente und einen kationischen Photoinitiator enthält. Das Polyacrylat kann ebenfalls, der Beschreibung nach zu geringen Anteilen wie zum Beispiel ca. 2 % des Copolymers, Epoxidgruppen enthalten. Im Hinblick auf die Epoxidkomponente wird keine spezielle Auswahl getroffen.

EP 914 027 A1 beschreibt ebenfalls härtbare Klebefolien, die ein Polyacrylat, eine Epoxid-Komponente und einen latenten Härter enthalten können. Das Polyacrylat kann geringe Anteile an Glycidyl(meth)acrylat enthalten.

WO 2013/101693 A1 offenbart thermisch härtbare Klebefilme erzeugt aus einem Acrylatmonomergemisch, das mittels Photoinitiierung radikalisch polymerisiert wird, und einer Epoxid-Komponente. Epoxidfunktionalisierte (Meth)acrylate werden nicht genannt.

WO 2015/048012 A1 beschreibt ein thermisch härtbares Haftklebesystem, das eine Polymethacrylat-Komponente enthält, die mit Benzoxazinen reagieren kann. Sie kann dazu u. a. Epoxid-Gruppen, bevorzugt über Glycidylmethacrylat als Comonomer ins Polymer eingebracht, enthalten. Der Beschreibung sind Glasübergangstemperaturen zu entnehmen, die über die sogenannte Fox-Gleichung (U. W. Gedde, Polymer Physics, 1999, Kluwer, Dortrecht, S. 70) berechnet werden. Die Fox-Gleichung erlaubt eine rechnerische Abschätzung der Glasübergangstemperatur einer homogenen Mischung und nutzt hierfür die Glasübergangstemperaturen der Ausgangskomponenten der Mischung, gewichtet über den jeweiligen Mischungsanteil dieser Komponenten. Die dort eingesetzten Grunddaten beziehen sich auf Glasübergangstemperaturen für hypothetische Homopolymere des entsprechenden Comonomers. Hierzu kann man sich Tabellenwerten bedienen, die für Homopolymere mit sehr hohen Molmassen, nämlich solchen, bei denen sich die Glasübergangstemperatur nicht mit dem Molekulargewicht ändert, gelistet sind. Die genannte Fox-Gleichung ist nicht zu verwechseln mit der sogenannnten Fox-Flory-Beziehung (Gleichung G1), die den Einfluss der Polymermolmasse auf die Glasübergangstemperatur beschreibt. Bei den in der WO 2015/048012 A1 beschriebenen Polymeren kann daher von sehr hohen Molekulargewichten ausgegangen werden und die Nutzung von Polymeren mit geringerem Molekulargewicht wurde nicht in Erwägung gezogen.

WO 1999/057216 A1 offenbart Formulierungen enthaltend 20 bis 80 Gew.-% Ethylenvinylacetat-Copolymere und 20 bis 80 Gew.-% einer Epoxid-Komponente, die auch ein Polymerisat sein kann. Als konkretes Beispiel wird ein Polymer enthaltend Glycidylmethacrylat aufgeführt. Polymere basierend auf mit (cyclo)aliphatischem Epoxid substituierten (Meth)acrylaten sind nicht genannt.

WO 2012/165259 A1 beschreibt polymerisierbare Flüssigklebeformulierungen, die durch UV-Strahlung zur Härtung gebracht werden. Dazu enthalten die Formulierungen Monomere, die cycloaliphatische Epoxid-Gruppen und (Meth)acrylat-Gruppen tragen. Die Formulierungen enthalten zudem einerseits Photoinitiatoren für die radikalische Polymerisation der (Meth)acrylat-Gruppen und andererseits Photoinitiatoren für die kationische Polymerisation der Epoxid-Gruppen. Bestrahlung initiiert dann gleichzeitig beide Reaktionsprozesse. Die Formulierungen weisen die für Flüssigklebesysteme üblichen Nachteile wie Geruch und Ausquetschneigung bei der Applikation auf. Zudem kann sich der radikalische Härtungsprozess als nachteilig auswirken, da diese Art der Härtung nur während der Bestrahlung abläuft und die Härtungsreaktion über diesen Mechanismus Klebstoff in Schattenbereichen nicht erreicht.

US 2002/185222 A1 beschreibt weitere Klebemassen, die in Klebebändern verwendet werden können.

### *Aufgabe*

Es besteht weiterhin Bedarf nach Reaktivharzen für härtbare Klebemassen insbesondere für Reaktivklebebänder, die durch Aktivierung eine hohe Verklebungsfestigkeit aufbauen können und im Aktivierungsschritt eine möglichst geringe Ausquetschneigung, gleichzeitig aber unter Verpressbedingungen trotzdem ein sehr gutes Auffließverhalten aufweisen und damit hohe Verklebungsfestigkeiten erlauben. Um diese sich entgegenstehenden Anforderungen optimal auszubalancieren, ist daher ein Klebesystem mit besonders ausgewogenem viskoelastischem Verhalten gesucht.

### *Lösung*

Die Aufgabe konnte gelöst werden durch Reaktivharze, wie in den beigefügten Ansprüchen definiert, auf Basis eines epoxidfunktionalisierten (Co)Polymers mit einer Molmasse aus einem erfindungsgemäßen Molmassenbereich oberhalb einer minimalen Molmasse und unterhalb einer maximalen Molmasse. Der erfindungsgemäße Molmassenbereich oberhalb der minimalen Molmasse umfasst denjenigen Molmassenbereich, in dem die Glasübergangstemperatur des ungehärteten epoxidfunktionalisierten (Co)Polymers von der Molmasse abhängt. Die Abhängigkeit zwischen Polymer-Molmasse, M, und Glasübergangstemperatur, $T_G$, an sich ist bekannt und näherungsweise durch die Fox-Flory-Beziehung

$$1/T_G = 1/T_G^{\infty} + \mathrm{const} / M \qquad \text{(G1)}$$

beschrieben, wobei $T_G^{\infty}$ die Glasübergangstemperatur eines Polymers ist, bei der sich $T_G$ nicht mehr mit der Molmasse ändert, und const eine Polymertyp-abhängige Konstante (T. Fox, P. J. Flory, J. Polym. Sci., 1954, 14, 315-319). Es wurde nämlich gefunden, dass epoxidfunktionalisierte (Co)Polymere in ihrem ungehärteten Zustand in diesem Molmassenbereich ein ausgezeichnetes viskoelastisches Verhalten für einen Verpressprozess aufweisen bzw. in auf ihnen basierenden Reaktivklebeformulierungen zu einem ausgezeichneten viskoelastischen Verhalten für einen Verpressprozess führen, und zwar zu einer besonders vorteilhaften Balance aus gutem Auffließvermögen und reduziertem Ausquetschverhalten, für den Fall, dass die Verpresstemperatur oberhalb der Glasübergangstemperatur liegt. Die Reaktivität erlaubt darüber hinaus sehr gute Verklebungsfestigkeiten für die gehärtete Reaktivklebemasse. Da sich in dem erfindungsgemäßen Molmassenbereich die Glasübergangstemperatur mit der Molmasse ändert, steigt die Glasübergangstemperatur während der Härtungsreaktion an, was zu einem Anstieg an innerer Festigkeit des Reaktivklebesystems führt und zu belastbaren Verklebungszuständen.

Die Erfindung betrifft dementsprechend - insbesondere thermisch und/oder strahlenchemisch härtbare - epoxidfunktionalisierte (Co)Polymere, nämlich epoxidfunktionalisierte (Co)Poly(meth)-acrylate, mit einer gewichtsmittleren Molmasse im Bereich von 5 000 g/mol bis 200 000 g/mol, auf Basis von mehr als 30 bis 100 Gew.-%, bevorzugt 50 bis 100 Gew.-%, (bezogen auf die Gesamtheit der dem epoxidfuntionalisierten (Co)Polymer zugrundeliegenden Monomere) zumindest einer Sorte eines mit einer Epoxy-Gruppe funktionalisierten (meth)acrylischen (Co)Monomers (a).

Das hier offenbarte Polymer ist somit eines erhältlich durch radikalische Polymerisation zumindest eines Monomers, nämlich eines oder mehrerer (Meth)Acrylat-Monomere und gegebenenfalls zusätzlich vinylischer Comonomere.

Die Angaben zu Molmassen beziehen sich auf die Messung mittels GPC gemäß Messmethode B.

Der Begriff "(Co)Polymer" wird im Sinne dieser Erfindung zusammenfassend für Homopolymere oder Copolymere verwendet. Sofern im Rahmen der Schrift von Polymeren gesprochen wird, sind damit (Co)Polymere gemeint, sofern sich aus dem jeweiligen Bezug nichts anderes ergibt.

Unter dem Begriff "(Co)Poly(meth)acrylat" sind im Sinne dieser Erfindung Polyacrylat- und Polymethacrylat-Homopolymere oder Copolymere aus (meth)acrylischen Monomeren sowie gegebenenfalls weiteren copolymeriserbaren Comonomeren zu verstehen.

Mit dem Begriff "(Meth)Acrylate" und dem Adjektiv "(meth)acrylisch" werden zusammenfassend die Verbindungen aus der Gruppe aus Acrylsäurederivaten - wie insbesondere Acrylsäureester - und Methacrylsäurederivaten - wie insbesondere Methacrylsäureester - bezeichnet.

"(Co)Polymerisierbar" bedeutet im Sinne dieser Erfindung das Vermögen einer Monomersorte bzw. eines Gemischs zumindest zweier Monomersorten, durch Molmassenaufbau ein (Co)Polymer zu bilden.

In bevorzugter Weise beträgt die gewichtsmittlere Molmasse des mit zumindest einer Gruppe eines Epoxids funktionalisierten (Co)Monomers (a) mindestens 10 000 g/mol, sehr bevorzugt mindestens 20 000 g/mol. Weiter bevorzugt beträgt die gewichtsmittlere Molmasse des mit zumindest einer Gruppe eines Epoxids funktionalisierten (Co)Monomers (a) höchstens 150 000 g/mol, sehr bevorzugt höchstens 100 000 g/mol.

Entsprechend des Anteils in der Gesamtheit der dem epoxidfunktionalisierten (Co)Polymer zugrundeliegenden Monomere haben die mit einer Epoxy-Gruppe funktionalisierten (meth)acrylischen (Co)Monomere (a) einen (Co)Monomeranteil im epoxidfunktionalisierten (Co)Polymervon mehr als 30 Gew.-% bis 100 Gew-%, bevorzugt von mindestens

50 Gew.-%. In sehr bevorzugter Weise wird als mit einer Epoxy-Gruppe funktionalisiertes (meth)acrylisches (Co)Monomer (a) ein cycloaliphatisches Epoxid eingesetzt, beziehungsweise werden, wenn mehrere mit einer Epoxy-Gruppe funktionalisierten (meth)acrylischen (Co)Monomere (a) vorhanden sind, für eines, mehrere oder alle dieser mit einer Epoxy-Gruppe funktionalisierten (meth)acrylischen (Co)Monomere (a) cycloaliphatische Epoxide eingesetzt. Insbesondere vorteilhaft werden für mehr als 50 Gew.-% der (Co)Monnomere (a) cycloaliphatische Epoxide eingesetzt, besonders bevorzugt werden im Sinne der (Co)Monomere (a) ausschließlich cycloaliphatische Epoxide eingesetzt.

Die zumindest eine Sorte eines epoxidfunktionalisierten (Co)Polymers kann optional Bausteine umfassen, die auf folgende Monomere zurückzuführen sind (wobei dann jedenfalls ein Copolmyer vorliegt), wobei jede der nachfolgend genannten Monomersorten (b), (c) und (d) unabhängig von der Anwesenheit der jeweils anderen Monomersorten vorliegen kann:

(b) eine oder mehrere Sorten Comonomere mit einer Glasübergangstemperatur von mindestens 25 °C, insbesondere mindestens 50 °C,
mit einem Comonomeranteil im Copolymer von 0 Gew-% bis weniger als 70 Gew-%, bevorzugt bis höchstens 50 Gew.-%,
und/oder
(c) eine oder mehrere Sorten Comonomere mit einer Glasübergangstemperatur von unterhalb 25 °C, insbesondere höchstens 0 °C,
mit einem Comonomeranteil im Copolymer von 0 Gew.-% bis weniger als 70 Gew.-%, bevorzugt bis höchstens 50 Gew.-%,
und/oder
(d) eine oder mehrere Sorten Comonomere, die zumindest eine andere Funktionalität als eine Epoxy-Gruppe tragen, insbesondere eine Silizium-haltige Gruppe,
mit einem Comonomeranteil im Copolymer von 0 Gew.-% bis 10 Gew.-%, bevorzugt bis 5 Gew.-%,

Mit Monomeranteil bzw. (Co)Monomeranteil wird im (Co)Polymer im Rahmen dieser Schrift der Anteil der auf diese (Co)Monomere zurückzuführenden Wiederholungseinheiten (Bausteine) in dem betreffenden (Co)Polymer bezeichnet. Die Monomeranteile in der für die Herstellung des entsprechenden Copolymers zu polymerisierenden Polymermischung werden vorteilhaft entsprechend gewählt.

Angaben zu Glasübergangstemperaturen in dieser Schrift beziehen sich auf die Messung mittels DSC nach Methode C.

Die Glasübergangstemperatur des epoxidfunktionalisierten (Co)Polymers liegt bevorzugt bei mindestens 0 °C, sehr bevorzugt bei mindestens 25 °C, noch mehr bevorzugt bei mindestens 35 °C. Sie liegt vorzugsweise höchstens bei 100 °C, bevorzugter bei höchstens 80 °C. In alternativer Ausführung der Erfindung kann die Glasübergangstemperatur des funktionalisierten (Co)Polymers (A) aber auch unter 0 °C liegen.

Bei Verwendung als Klebesystem oder in einem Klebesystem erweicht das Klebesystem bei Applikation unter Erwärmung und Verpressung, nimmt in seinem Benetzungsverhalten zu und kann dadurch zu den zu verklebenden Substraten Kontakt ausbilden. In diesem Zusammenhang ist die Molmasse des hier offenbarten epoxidfunktionalisierten (Co)Polymers von zentraler Bedeutung, da sie bei gegebenen Zusammensetzung die viskoelastischen Eigenschaften der Schmelze und hier insbesondere die Schmelzviskosität beeinflusst. Je höher die Molmasse, desto ausgeprägter wirken sich Verschlaufungen als temporäre Vernetzungspunkte auf das viskoelastische Verhalten aus. Liegt die Molmasse des hier offenbarten funktionalisierten (Co)Polymers unterhalb des seines Verschlaufungsmolekulargewichts, sind entsprechende Polymere unter Verpressbedingungen, also oberhalb der Glasübergangstemperatur sehr fließfähig und bergen die Gefahr zu starken Ausquetschverhaltens. Liegt die Molmasse dagegen zu hoch, nämlich im Molmassenbereich, in dem sich die Glasübergangstemperatur nicht mehr mit der Molmasse ändert, ist das Polymer bereits zu stark verschlauft, wodurch das Fließverhalten so reduziert wird, dass unter Verpressbedingungen kein gutes Auffließen mehr gewährleistet ist.

Das hier offenbarte epoxidfunktionalisierte (Co)Polymer bietet zudem einen weiteren Vorteil. Die Erfindung macht sich nämlich die Erkenntnis zu Nutze, dass ein Reaktivsystem im Verklebungsschritt, bei dem Ausquetschen auftreten kann, durch Aktivierung durch erhöhte Temperatur und/oder (UV) Strahlung einen Aufbau an Molekulargewicht durchläuft. Dabei finden zwei Prozesse statt, Kettenwachstum und Quervernetzung. Beide Prozesse sind kinetisch kontrolliert und benötigen Zeit. Kommt unter Verklebungsbedingungen Wärme zum Einsatz, dann wird die Viskosität des Systems entsprechend ihrer Temperaturabhängigkeit reduziert, was zu Ausquetschen führen kann. Erfolgt der Molekulargewichtsaufbau nicht rasch genug, kann er durch die Molmassenabhängigkeit der Viskosität, die der Temperaturabhängigkeit der Viskosität prinzipiell entgegenwirkt, nicht den durch Wärmeeintrag bedingten Viskositätsabfall kompensieren. Die Folge ist unerwünschtes Ausquetschen von Klebematerial und ein unsauberes Verklebungsresultat.

Hier offenbarte Polymere weisen aber bereits eine Basismolmasse auf, so dass der Schritt des Kettenwachstums bereits vor der Aktivierung erfolgt ist und lediglich eine Quervernetzung zum Aufbau von Kohäsion ablaufen braucht.

(Co)Monomere

Folgende (Co)Monomere der Sorten (a), (b), (c) bzw. (d) sind im Sinne dieser Erfindung vorteilhaft:

(Co)Monomere (a)

Für die (Co)Monomere (a) werden Monomere der Formel (I)

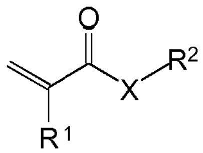

(I)

verwendet, wobei $-R^1$ gleich -H oder $-CH_3$, -X- gleich $-N(R^3)-$ oder-O- , $-R^3$ gleich -H oder $-CH_3$ und $-R^2$ eine Epoxy-funktionalisierte (Hetero)hydrocarbylgruppe darstellen.

Weiter bevorzugt umfasst die Gruppe $R^2$ lineare, verzweigte, cyclische oder polycyclische Kohlenwasserstoffe mit 2 bis 30 Kohlenstoffatomen, welche mit einer Epoxygruppe funktionalisiert sind. Besonders bevorzugte Vertreter dieser Gruppe sind 3,4-Epoxycyclohexylsubstituierte Monomere wie beispielsweise 3,4-Epoxycyclohexylmethylmethacrylat, 3,4-Epoxycyclohexylmethylacrylat, 3,4-Epoxycyclohexylmethacrylat, 3,4-Epoxycyclohexylacrylat.

Weniger bevorzugte, aber von der Erfindung dennoch umfasste Co(Monomere) (a) sind Glycidylgruppen-haltige (Co)Monomere wie Glycidylacrylat oder Glycidylmethacrylat. Die Härtungseigenschaften der Oxiraneinheiten in Glycidylgruppen unterscheiden sich insbesondere bei kationischer Härtung jedoch von denen (cyclo)aliphatischer Epoxide. Zudem enthalten Glycidylether-basierende Systeme aus Gründen ihrer Herstellprozesse meistens Resthalogen. Klebemassen basierend auf erfindungsgemäßen epoxidfunktionalisierten (Co)Polymeren weisen aber bevorzugt einen sehr niedrigen Halogengehalt (< 1000 ppm, bevorzugt sogar < 100 ppm), insbesondere bezogen auf Chlor und Brom, auf.

Über den Anteil an (Co)Monomeren (a) lassen sich u. a. mechanische Eigenschaften des (Co)Polymers und darüber auch u. a. die mechanischen Eigenschaften eine diese Polymere enthaltenen Formulierung einstellen, da über den Anteil an Epoxidgruppen im (Co)Polymer während der Härtung die Vernetzungsdichte eingestellt werden kann. Niedrige Anteile an (Co)Monomer (a) führen zu weniger elastischen Klebeschichten, höhere Anteile zu ausgeprägter elastischen Klebeschichten, jeweils im Hinblick auf die viskoelastischen Eigenschaften.

Die (Co)Monomere (a) können bezüglich ihrer Glasübergangstemperatur grundsätzlich frei gewählt werden, wobei insbesondere vorteilhaft derart ausgewählt wird, dass die Glasübergangstemperatur des resultierenden (Co)Polymers je nach den gewünschten Eigenschaften - etwa haftklebrig oder nicht haftklebrig - im entsprechend erforderlichen Bereich liegt (siehe hierzu auch weiter unten).

In einer vorteilhaften Weise können die Monomere (a) beispielsweise derart ausgewählt werden, dass für ihre überwiegende Zahl, insbesondere für alle Monomere (a) gilt, dass die Glasübergangstemperatur des hypothetisches Homopolymers aus dem jeweiligen Monomer (in diesem Zusammenhang ist die Glasübergangstemperatur des Homopolymeren aus den entsprechenden Monomeren im molmassenunabhängigen Glasübergangstemperaturbereich, $T_G^\infty$, gemeint) mindestens 25 °C, insbesondere mindestens 50 °C liegt.

In einer anderen vorteilhaften Weise können die Monomere (a) beispielweise derart ausgewählt werden, dass für ihre überwiegende Zahl, insbesondere für alle Monomere (a) gilt, dass die Glasübergangstemperatur des hypothetisches Homopolymers aus dem jeweiligen Monomer (in diesem Zusammenhang ist die Glasübergangstemperatur des Homopolymeren aus den entsprechenden Monomeren im molmassenunabhängigen Glasübergangstemperaturbereich, $T_G^\infty$, gemeint) unterhalb von 25 °C, insbesondere unterhalb von 0 °C liegt.

Comonomere (b)

Comonomere (b) weisen insbesondere keine Epoxy-Gruppen auf. Im Sinne der Comonomere (b) sind alle dem Fachmann bekannten - insbesondere epoxygruppenfreie - (Meth)AcrylatMonomere und andere copolymerisierbaren Vinylmonomere einsetzbar, die mit (Co)Monomeren (a) und gegebenenfalls (c) und/oder (d) copolymerisierbar sind und die eine Glasübergangstemperatur als hypothetisches Homopolymer (in diesem Zusammenhang ist die Glasübergangstemperatur des Homopolymeren aus den entsprechenden Monomeren im molmassenunabhängigen Glasübergangstemperaturbereich, $T_G^\infty$, gemeint) von mindestens 25 °C, insbesondere mindestens 50 °C. Solche Monomere werden im Rahmen dieser Schrift auch als "harte Monomere" bezeichnet. Zur Auswahl solcher Comonomere kann zum Beispiel das Polymer Handbook (J. Brandrup, E. H. Immergut, E. A. Grulke (Hrsg.), 4. Aufl., 1999, J. Wiley, Hoboken, Bd. 1, Kapitel VI/193) konsultiert werden. Vorteilhaft einsetzbar sind auch sogenannte Makromere nach WO 2015/082143 A1. Bevorzugt werden Comonomere, die durch ihre chemische Bauart im Wesentlichen vor der Initiierung der Härtungsreaktion keine Reaktivität mit den Epoxid-Funktionalitäten der (Co)Monomere (a) aufweisen oder initiierend oder katalysierend in Bezug auf eine Reaktion der Epoxid-Funktionalitäten wirken oder ihre Reaktivität mit Epoxid-Funktionalitäten anderweitig unterbunden ist. Über den Anteil an Comonomeren (b) lassen sich klebtechnische und mechanische Eigenschaften der Klebemasse einstellen. Sie machen die Klebemasse tendenziell härter.

Comonomere (c)

Comonomere (c) weisen insbesondere keine Epoxy-Gruppen auf. Im Sinne der Comonomere (c) sind alle dem Fachmann bekannten - insbesondere epoxygruppenfreie - (Meth)AcrylatMonomere und andere copolymerisierbare Vinylmonomere einsetzbar, die mit (Co)Monomeren (a) und gegebenenfalls vorhandenen Comonomeren (b) und/oder (d) copolymerisierbar sind, und die eine Glasübergangstemperatur als hypothetisches Homopolymer (in diesem Zusammenhang ist die Glasübergangstemperatur des Homopolymeren aus den entsprechenden Monomeren im molmassenunabhängigen Glasübergangstemperaturbereich, $T_G^{\infty}$, gemeint) von unterhalb 25 °C, insbesondere höchstens 0 °C besitzen. Solche Monomere werden im Rahmen dieser Schrift auch als "weiche Monomere" bezeichnet. Zur Auswahl solcher Comonomere kann beispielsweise das Polymer Handbook (J. Brandrup, E. H. Immergut, E. A. Grulke (Hrsg.), 4. Aufl., 1999, J. Wiley, Hoboken, Bd. 1, Kapitel VI/193) konsultiert werden. Vorteilhaft einsetzbar sind auch sogenannte Makromere nach WO 2015/082143 A1. Bevorzugt werden Comonomere, die durch ihre chemische Bauart vor der Initiierung der Härtungsreaktion im Wesentlichem nicht initiierend oder katalysierend in Bezug auf eine Reaktion der Epoxid-Funktionalitäten wirken, insbesondere die keine Reaktivität mit den Epoxid-Funktionalitäten der (Co)Monomere (a) aufweisen und/oder deren Reaktivität mit Epoxid-Funktionalitäten anderweitig unterbunden ist. Über den Anteil an Comonomeren (c) lassen sich klebtechnische und mechanische Eigenschaften der Klebemasse einstellen. Sie machen die Klebemasse tendenziell weicher und es kann Haftklebrigkeit realisiert werden.

Comonomere (d)

Im Sinne der Comonomere (d) kommen insbesondere solche Monomere zum Einsatz, die mit (Co)Monomeren (a) und gegebenenfalls vorhandenen Comonomeren (b) und/oder (c) copolymerisierbar sind und die die adhäsiven Eigenschaften des erfindungsgemäßen Copolymers optimieren. In diesem Zusammenhang sind insbesondere Siliziumhaltige Comonomere und hier acrylierte oder methacrylierte Alkoxysilan-haltige Comonomere als vorteilhaft zu nennen. Beispiele sind 3-(Triethoxysilyl)propylmethacrylat, 3-(Triethoxysilyl)-propylacrylat, 3-(Trimethoxysilyl)propylacrylat, 3-(Trimethoxysilyl)propylmethacrylat, Methacryl-oxymethyltriethoxysilan, (Methacryloxymethyl)trimethoxysilan, (3-Acryloxypropyl)methyl-dimethoxysilan, (Methacryloxymethyl)methyldimethoxysilan, γ-Methacryloxypropylmethyl-dimethoxysilan, Methacryloxypropylmethyldiethoxysilan, 3-(Dimethoxymethylsilyl)propyl-methacrylat, Methacryloxypropyldimethylethoxysilan, Methacryloxypropyldimethylmethoxysilan. Von den vorgenannten Verbindungen sind 3-(Triethoxysilyl)propylmethacrylat, 3-(Triethoxysilyl)-propylacrylat, 3-(Trimethoxysilyl)propylacrylat und 3-(Trimethoxysilyl)propylmethacrylat besonders bevorzugt. Auch die Comonomere (d) weisen bevorzugt keine Epoxy-Gruppen auf.

Herstellung

Die Herstellung der epoxidfunktionalisierten (Co)Polymere erfolgt durch (Co)Polymerisation der zugrundeliegenden (Co)Monomere und kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (zum Beispiel Hexan, Heptan, Octan, Isooctan, Isohexan, Cyclohexan), aromatische Kohlenwasserstoffe (zum Beispiel Benzol, Toluol, Xylol), Ester (zum Beispiel Essigsäureethylester, Essigsäurepropyl-, -butyl- oder -hexylester), halogenierte Kohlenwasserstoffe (zum Beispiel Chlorbenzol), Alkanole (zum Beispiel Methanol, Ethanol, Ethylenglycol, Ethylenglycolmonomethylether), Ketone (zum Beispiel Aceton, Butanon) und Ether (zum Beispiel Diethylether, Dibutylether) oder Gemische davon. Es wird auf Verbindungen verzichtet, die mit Epoxid-Funktionalitäten vor der Initiierung der Härtungsreaktion reagieren können oder die Reaktion von Epoxid-Funktionalitäten initiieren oder katalysieren können oder ihre Reaktivität mit Epoxid-Funktionalitäten anderweitig unterbunden ist.

Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Polyethylenglycolen, Polypropylenglycolen, Estern, Alkoholderivaten, Hydroxyetherderivaten, Ketonen und dergleichen, sowie Derivaten und Gemischen davon. Es wird auf Verbindungen verzichtet, die mit Epoxid-Funktionalitäten reagieren können und/oder die die Reaktion von Epoxid-Funktionalitäten initiieren oder katalysieren können und/oder deren Reaktivität mit Epoxid-Funktionalitäten nicht anderweitig unterbunden ist.

Zur Herstellung der hier offenbarten epoxidfunktionalisierten (Co)Polymere werden vorteilhaft konventionelle radikalische Polymerisationen oder kontrollierte radikalische Polymerisationen durchgeführt. Für die radikalisch verlaufenden Polymerisationen werden bevorzugt Initiatorsysteme eingesetzt, die radikalische Initiatoren zur Polymerisation (Polymerisationsinitiatoren) enthalten, insbesondere thermisch zerfallende radikalbildende Azo- oder Peroxoinitiatoren. Prinzipiell eignen sich jedoch alle für Acrylate und/oder Methacrylate dem Fachmann geläufigen, üblichen Polymerisationsinitiatoren. Die Produktion von C-zentrierten Radikalen ist im Houben-Weyl, Methoden der Organischen Chemie, Vol. E 19a, S. 60-147, beschrieben. Diese Methoden werden in bevorzugter Weise in Analogie angewendet.

Die im Zusammenhang mit der Herstellung der (Co)Polymere genannten radikalischen Polymerisationsinitiatoren sind nicht zu verwechseln mit den für die Härtung der härtbaren Klebemasse zum Einsatz kommenden Aktivatoren.

Beispiele für Radikalquellen sind Peroxide, Hydroperoxide und Azoverbindungen. Als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-tert-butylperoxid, Azobisiisobutyronitril, Cyclohexylsulfonylacetylperoxid, Diisopropylpercarbonat, tert-Butylperoktoat, Benzpinacol. Besonders bevorzugt wird als radikalischer Polymerisationsinitiatoren 2,2'-Azobis(2-methylbutyronitril) oder 2,2-Azobis-(2,4-dimethylvaleronitril) verwendet.

Die Polymerisationszeit beträgt - je nach Temperatur und gewünschtem Umsatz - zwischen 4 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Polymerisationsinitiatoren der Eintrag von Wärme essentiell. Die Polymerisation kann für die thermisch zerfallenden Polymerisationsinitiatoren durch Erwärmen auf 50 °C oder mehr, je nach Initiatortyp, initiiert werden. Bevorzugt wird eine Initiierungstemperatur von höchstens 100 °C, sehr bevorzugt von höchstens 80 °C.

Zur Radikalstabilisierung werden in günstiger Vorgehensweise Nitroxide eingesetzt, wie zum Beispiel (2,2,5,5-Tetramethyl-1-pyrrolidinyl)oxyl (PROXYL), (2,2,6,6-Tetramethyl-1-piperidinyl)oxyl (TEMPO), Derivate des PROXYLs oder des TEMPOs und weitere dem Fachmann geläufige Nitroxide.

Eine Reihe weiterer Polymerisationsmethoden, nach denen die epoxidfunktionalisierten (Co)Polymere in alternativer Vorgehensweise hergestellt werden können, lassen sich aus dem Stand der Technik wählen: WO 96/24620 A1 beschreibt ein Polymerisationsverfahren, bei dem sehr spezielle Radikalverbindungen wie zum Beispiel phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterocyclische Alkoxyamine als Regulatoren in kontrolliert radikalischen Polymerisationen. Als weitere kontrollierte Polymerisationsmethode lässt sich die Atom Transfer Radical Polymerization (ATRP) einsetzen, wobei als Polymerisationsinitiatoren bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe eingesetzt werden. Die unterschiedlichen Möglichkeiten der ATRP sind ferner in den Schriften der US 5,945,491 A, der US 5,854,364 A und der US 5,789,487 A beschrieben.

Als weiterer Herstellprozess wird eine Variante der RAFT-Polymerisation (reversible additionfragmentation chain transfer polymerization) durchgeführt. Der Polymerisationsprozess ist zum Beispiel in den Schriften WO 98/01478 A1 und WO 99/31144 A1 ausführlich beschrieben. Zur Herstellung eignen sich besonders vorteilhaft Trithiocarbonate der allgemeinen Struktur $R'''$-S-C(S)-S-$R'''$ *(*Macromolecules, 2000, 33, 243-245).

In einer sehr vorteilhaften Variante werden beispielsweise die Trithiocarbonate (TTC1) und (TTC2) oder die Thioverbindungen (THI1) und (THI2) zur Polymerisation eingesetzt, wobei Φ ein Phenylring, der unfunktionalisiert oder durch Alkyl- oder Arylsubstituenten, die direkt oder über Ester- oder Etherbrücken verknüpft sind, funktionalisiert sein kann, eine Cyanogruppe oder ein gesättigter oder ungesättigter aliphatischer Rest sein kann. Der Phenylring Φ kann optional einen oder mehrere Polymerblöcke, beispielsweise Polybutadien, Polyisopren oder Polystyrol tragen, um nur einige zu nennen. Funktionalisierungen können beispielsweise Halogene, Hydroxygruppen, Epoxidgruppen sein, ohne dass diese Aufzählung Anspruch auf Vollständigkeit erhebt.

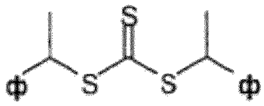

(TTC 1)

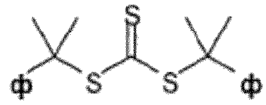

(TTC 2)

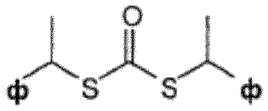 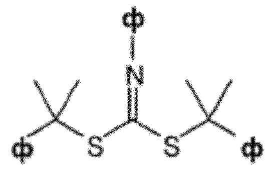

(THI 1) (THI 2)

In Verbindung mit den oben genannten kontrolliert radikalisch verlaufenden Polymerisationen werden Polymerisationsinitiatorsysteme bevorzugt, die radikalische Polymerisationsinitiatoren zur Polymerisation enthalten, insbesondere die schon zuvor aufgezählten thermisch zerfallenden radikalbildenden Azo- oder Peroxoinitiatoren. Prinzipiell eignen sich hierfür jedoch alle für Acrylate und/oder Methacrylate bekannten üblichen Polymerisationsinitiatoren. Weiterhin können auch Radikalquellen verwendet werden, die erst unter UV-Bestrahlung Radikale freisetzen. Maßgeblich ist, dass diese Initiatoren keine Reaktion der Epoxid-Funktionalitäten aktivieren können.

Zum Zwecke der Molmasseneinstellung können auch Kettenübertragungsreagenzien nach dem Stand der Technik verwendet werden, sofern sie keine Reaktivität gegenüber Epoxidgruppen aufweisen oder ihre Reaktivität mit Epoxidgruppen anderweitig unterbunden ist.

Die gewünschte Molmasse wird bevorzugt durch Polymerisationsverfahren, seien es kontrollierte Polymerisationsverfahren oder nicht kontrollierte Polymerisationsverfahren, eingestellt, bei denen keine Mittel eingesetzt werden, die vor der Initiierung der Härtungsreaktion des Klebefilms mit Epoxid-Funktionalitäten reagieren können oder die Reaktion von Epoxid-Funktionalitäten initiieren oder katalysieren können oder ihre Reaktivität mit Epoxid-Funktionalitäten anderweitig unterbunden ist.

Die Einstellung der gewünschten Molmasse kann zudem und zwar besonders bevorzugt über das Einsatzverhältnis von Polymerisationsinitiator und (Co)Monomer(en) und/oder die Konzentration an (Co)Monomeren realisiert werden.

Erfindungsgemäße Reaktivklebesysteme basierend auf hier offenbarten epoxidfunktionalisierten (Co)Polymeren

Das hier offenbarte epoxidfunktionalisierte (Co)Polymer eignet sich hervorragend in Kombination mit einem latentreaktiven Initiator (Härter) (A), der thermisch und/oder strahlenchemisch (insbesondere mit UV-Strahlung) aktiviert werden kann, und kann dann vorteilhaft als härtbares Reaktivklebsystem oder in einem härtbaren Reaktivklebesystem verwendet werden.

Entsprechend betrifft die Erfindung auch härtbare Reaktivklebesysteme, die zumindest eine Sorte eines hier offenbarten epoxidfunktionalisierten (Co)Polymers und zumindest einer Sorte eines latentreaktiven Initiators umfassen oder enthalten. Mittels solcher härtbarer Reaktivklebesysteme können dann Verklebungsverbünde bestehend aus einem ersten zu verklebenden Substrat, einem zweiten zu verklebenden Substrat und einem Klebeprodukt enthaltend zumindest eine Sorte eines erfindungsgemäßen härtbaren Reaktivklebesystems hergestellt werden. Die Verklebungsfestigkeit des Verklebungsverbunds erhält man, wenn das härtbare Reaktivklebesystem im Verbund in gehärteter Form vorliegt.

Die Titulierung "gehärtetes System" oder "gehärtete Klebemasse" bedeutet im Sinne dieser Erfindung, dass die Klebemasse mit dem epoxidfunktionalisierten (Co)Polymer durch Einwirkung der Härter-Komponente und gegebenenfalls einen weiteren Stimulus wie Wärme und/oder Strahlung aktiviert wurde und eine Reaktion unter Beteiligung der Epoxid-Gruppen des (Co)Polymers stattgefunden hat. Es brauchen aber nicht alle Epoxid-Gruppen, die chemisch an der Härtungsreaktion teilnehmen können, reagiert zu haben. Vielmehr kann auch ein Umsatz von 50 % der funktionellen Gruppen bereits eine ausreichend hohe Glasübergangstemperatur mit sich bringen und für die Verklebungsanwendung sehr gut geeignet sein. Ein Umsatz von 50 % ist hier beispielhaft genannt. Ebenso kann die gemachte Aussage auch auf höhere wie 60 %, 70 %, 80 %, 90 % oder 100 % oder sogar niedrigere Umsätze wie 40 % oder 30 % gelten. Entscheidend ist, dass die Verklebungseigenschaften nach durchgeführter Härtung anwendungsgerecht sind, d. h. zum Beispiel die Ausstoßfestigkeit nach Test E bei mindestens 2,0 $N/mm^2$ liegt.

Erfindungsgemäße Reaktivklebesysteme enthalten dementsprechend vorteilhaft zumindest eine Sorte eines Härters. Ein Härter ist allerdings nicht zwangsläufig erforderlich, da das hier offenbarte (Co)Polymer bei ausreichender Temperatur selbstvernetzend ist. Kommen jedoch Härter zum Einsatz, dann werden sie so ausgewählt, dass die resultierende Formulierung eine möglichst ausgeprägte Latenz in ihrer Reaktivität aufweist. Das heißt, dass das Klebesystem bzw. der auf ihm basierende Klebefilm unter bestimmten Bedingungen - wie zum Beispiel bei Raumtemperatur oder auch leicht erhöhten Temperaturen wie 35 °C oder sogar 50 °C bzw. unter Lichtausschluss - im Wesentlichen keine oder sogar gar keine Reaktion zeigt. Die Reaktion folgt idealerweise erst auf einen Aktivierungsimpuls, der durch erhöhte Temperatur und/oder (UV) Strahlung ausgelöst werden kann. Im Sinne dieser Erfindung wird Latenz für thermisch aktivierbare Systeme über die Aktivierungstemperatur, die über ein DSC-Experiment ermittelt werden kann, definiert (Test D). Die so ermittelte Aktivierungstemperatur liegt für erfindungsgemäße thermische Härter bei mindestens 60 °C,

bevorzugt bei mindestens 75 °C, sehr bevorzugt bei mindestens 90 °C. Sie liegt höchstens bei 150 °C, bevorzugt bei höchstens 120 °C. Thermische Latenz ist bei (UV) strahlenchemisch aktivierbaren Härtern typischerweise gegeben. Hier muss dagegen auf Lichtausschluss bis zum gewünschten Aktivierungszeitpunkt geachtet werden.

Als Beispiele für geeignete Härter seien thermisch aktivierbare Säurebildner, TAG, genannt. Durch Wärmeeinfluss wird aus der Initiatorsubstanz eine starke Säure, die sogenannten Supersäure, gebildet, die eine Ringöffnung der Epoxid-Gruppen bewirken kann. Im Sinne der vorliegenden Erfindung einsetzbare thermisch aktivierbare Initiatoren für eine kationische Härtung von Epoxid-Gruppen sind insbesondere Pyridinium-, Ammonium- (insbesondere Anilinium-) und Sulfonium- (insbesondere Thiolanium-)-Salze sowie Lanthanoidtriflate.

Sehr vorteilhaft sind N-Benzylpyridinium-Salze und Benzylpyridinium-Salze, wobei Aromaten zum Beispiel mit Alkyl- Alkoxy-, Halogen- oder Cyano-Gruppen substituiert sein können.

J. Polym. Sei. A, 1995, 33, 505ff, US 2014/0367670 A1, US 5,242,715, J. Polym. Sei. B, 2001, 39, 2397ff, EP 393893 A1, Macromolecules, 1990, 23, 431ff, Macromolecules, 1991, 24, 2689, Macromol. Chem. Phys., 2001, 202, 2554ff, WO 2013/156509 A2 und JP 2014/062057 A1 nennen entsprechende Verbindungen, die im Sinne dieser Erfindung einsetzbar sind.

Von den kommerziell erhältlichen Initiatorsystemen seien als Beispiele für sehr vorteilhaft einsetzbare Verbindungen San-Aid SI 80 L, San-Aid SI 100 L, San-Aid SI 110 L, San-Aid SI B2A, San-Aid SI B3, San-Aid SI B3A und San-Aid SI B4 der Firma Sanshin, Opton CP-66 und Opton CP-77 der Firma Adeka und K-Pure TAG 2678, K-Pure CXC 1612 und K-Pure CXC 1614, K-Pure CXC 1615, K-Pure CXC 1821 der Firma King Industries genannt.

Einsetzbar sind zudem Lanthanoidtriflate wie Samarium-III-Triflat, Ytterbium-III-Triflat, Erbium-III-Triflat oder Dysprosium-III-Triflat (erhältlich bei Sigma Aldrich) und Lanthan-III-Triflat (erhältlich bei Alfa Aesar).

Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amid und Tris-(trifluoromethylsulfonyl)-methid genannt. Zudem einsetzbar sind Anionen nach JP 2012-056915 A1 und EP 393893 A1. Initiatoren, die im Wesentlichen frei von Chlor und Brom sind, werden bevorzugt. Das Anion ist bevorzugt Arsenat- und Antimonat-frei.

Dem Fachmann sind weitere Systeme bekannt, die ebenfalls erfindungsgemäß einsetzbar sind. Latentreaktive thermisch aktivierbare Härter für die kationische Härtung werden unkombiniert oder als Kombination von zwei oder mehreren thermisch aktivierbaren Härtern eingesetzt.

Der Anteil thermisch aktivierbarer Härter für die insbesondere kationische Härtung bezogen auf Gesamtrezeptur liegt vorzugsweise bei mindestens 0,1 Gew.-% und höchstens 5 Gew.-%, bevorzugt bei mindestens 0,3 Gew.-% und höchstens 3 Gew.-%.

Im Sinne der vorliegenden Erfindung vorteilhafte Aktivierungstemperaturen, also solche Temperaturen, bei denen die kationische Härtung der epoxidfunktionalisierten (Co)Polymere gestartet werden kann, liegen bei mindestens 60 °C, bevorzugt bei mindestens 75 °C, weiter bevorzugt bei mindestens 90 °C. Härtung / Initiierung in diesen Temperaturbereichen wird bevorzugt, um thermisch empfindliche Substrate nicht thermisch zu schädigen. Bei thermisch beständigeren Substraten sind auch höhere Härtungstemperaturen zum Beispiel bei 120 °C, 150 °C, 180 °C, 200 °C oder noch höher denkbar und für manche Verklebungsaufgaben sogar bevorzugt. Die Härtungsdauer kann dabei bei 15 min oder mehr und 2 h oder weniger liegen, auch wenn deutlich kürzere (wie 10 s, 30 s, 60 s, 120 s, 240 s, 5 min oder 10 min) oder noch längere Härtungszeiten nicht ausgeschlossen sind.

Sehr bevorzugt in Kombination mit dem hier offenbarten epoxidfunktionalisierten (Co)Polymer sind zudem strahlenchemisch (UV) aktivierbare Säurebildner, PAG. Diese können durch UV-Initiierung eine kationische Härtungsreaktion der Epoxid-Gruppen bewirken. Unter den Härtern (Initiatoren) für eine kationische UV-Härtung sind insbesondere Sulfonium-, lodonium- und Metallocen-basierende Systeme einsetzbar.

Als Beispiele für Sulfonium-basierende Kationen sei auf die Ausführungen in US 6,908,722 B1 (insbesondere Spalten 10 bis 21) verwiesen.

Als Beispiele für Anionen, die als Gegenionen für die oben genannten Kationen dienen, seien Tetrafluoroborat, Tetraphenylborat, Hexafluorophosphat, Perchlorat, Tetrachloroferrat, Hexafluoroarsenat, Hexafluoroantimonat, Pentafluorohydroxyantimonat, Hexachloroantimonat, Tetrakispentafluorophenylborat, Tetrakis-(pentafluoromethylphenyl)-borat, Bi-(trifluoromethylsulfonyl)-amid und Tris-(trifluoromethylsulfonyl)-methid genannt. Ferner sind insbesondere für lodonium-basierende Härter (Initiatoren) auch Chlorid, Bromid oder lodid als Anionen verwendbar. Zudem einsetzbar sind Anionen nach JP 2012-056915 A1 und EP 393893 A1. Initiatoren, die im Wesentlichen frei von Chlor und Brom sind, werden auch hier bevorzugt. Auch hier ist das Anion bevorzugt Arsen- und Antimon-frei.

Konkreter zählen zu den einsetzbaren Systemen

- Sulfonium-Salze (siehe zum Beispiel US 4,231,951 A, US 4,256,828 A, US 4,058,401 A, US 4,138,255 A und US 2010/063221 A1) wie Triphenylsulfoniumhexafluoroarsenat, Triphenylsulfoniumhexafluoroborat, Triphenylsulfoniumtetrafluoroborat, Triphenylsulfoniumtetrakis-(pentafluorobenzyl)-borat, Methyldiphenylsulfoniumtetrafluoroborat,

Methyldiphenylsulfoniumtetrakis-(pentafluorobenzyl)-borat, Dimethylphenylsulfoniumhexafluorophosphat, Triphenylsulfoniumhexafluorophosphat, Triphenylsulfoniumhexafluoroantimonat, Diphenylnaphthylsulfoniumhexafluoroarsenat, Tritolylsulfoniumhexafluorophosphat, Anisyldiphenylsulfoniumhexafluoroantimonat, 4-Butoxyphenyldiphenylsulfoniumtetrafluoroborat, 4-Butoxyphenyldiphenylsulfoniumtetrakis-(pentafluorobenzyl)-borat, 4-Chlorophenyldiphenylsulfoniumhexafluoroantimonat, Tris-(4-phenoxyphenyl)-sulfoniumhexafluorophosphat, Di-(4-ethoxyphenyl)-methylsulfoniumhexafluoroarsenat, 4-Acetylphenyldiphenylsulfoniumtetrafluoroborat, 4-Acetylphenyldiphenylsulfoniumtetrakis-(pentafluorobenzyl)-borat, Tris-(4-thiomethoxyphenyl)-sulfoniumhexafluorophosphat, Di-(methoxysulfonylphenyl)-methylsulfoniumhexafluoroantimonat, Di-(methoxynaphthyl)-methylsulfoniumtetrafluoroborat, Di-(methoxynaphthyl)-methylsulfoniumtetrakis-(pentafluorobenzyl)-borat, Di-(carbomethoxyphenyl)-methylsulfoniumhexafluorophosphat, (4-Octyloxyphenyl)-diphenylsulfoniumtetrakis-(3,5-bis-trifluoromethylphenyl)-borat, Tris-[4-(4-acetylphenyl)-thiophenyl]-sulfoniumtetrakis-(pentafluorophenyl)-borat, Tris-(dodecylphenyl)-sulfoniumtetrakis-(3,5-bis-trifluoromethylphenyl)-borat, 4-Acetamidphenyldiphenylsulfoniumtetrafluoroborat, 4-Acetamidphenyldiphenylsulfoniumtetrakis-(pentafluorobenzyl)-borat, Dimethylnaphthylsulfoniumhexafluorophosphat, Trifluoromethyldiphenylsulfoniumtetrafluoroborat, Trifluoromethyldiphenylsulfoniumtetrakis-(pentafluorobenzyl)-borat, Phenylmethylbenzylsulfoniumhexafluorophosphat, 5-Methylthianthreniumhexafluorophosphat, 10-Phenyl-9,9-dimethylthioxantheniumhexafluorophosphat, 10-Phenyl-9-oxothioxantheniumtetrafluoroborat, 10-Phenyl-9-oxothioxantheniumtetrakis-(pentafluorobenzyl)-borat, 5-Methyl-10-oxothianthreniumtetrafluoroborat, 5-Methyl-10-oxothianthreniumtetrakis-(pentafluorobenzyl)-borat und 5-Methyl-10,10-dioxothianthreniumhexafluorophosphat,

- Iodonium-Salze (siehe zum Beispiel US 3,729,313 A, US 3,741,769 A, US 4,250,053 A, US 4,394,403 A und US 2010/063221 A1) wie Diphenyliodoniumtetrafluoroborat, Di-(4-methylphenyl)-iodoniumtetrafluoroborat, Phenyl-4-methylphenyliodoniumtetrafluoroborat, Di-(4-chlorphenyl)-iodoniumhexafluorophosphat, Dinaphthyliodoniumtetrafluoroborat, Di-(4-trifluormethylphenyl)-iodoniumtetrafluoroborat, Diphenyliodoniumhexafluorophosphat, Di-(4-methylphenyl)-iodoniumhexafluorophosphat, Diphenyliodoniumhexafluoroarsenat, Di-(4-phenoxyphenyl)-iodoniumtetrafluoroborat, Phenyl-2-thienyliodoniumhexafluorophosphat, 3,5-Dimethylpyrazolyl-4-phenyliodoniumhexafluorophosphat, Diphenyliodoniumhexafluoroantimonat, 2,2'-Diphenyliodoniumtetrafluoroborat, Di-(2,4-dichlorphenyl)-iodoniumhexafluorophosphat, Di-(4-bromphenyl)-iodoniumhexafluorophosphat, Di-(4-methoxyphenyl)-iodoniumhexafluorophosphat, Di-(3-carboxyphenyl)-iodoniumhexafluorophosphat, Di-(3-methoxycarbonylphenyl)-iodoniumhexafluorophosphat, Di-(3-methoxysulfonylphenyl)-iodoniumhexafluorophosphat, Di-(4-acetamidophenyl)-iodoniumhexafluorophosphat, Di-(2-benzothienyl)-iodoniumhexafluorophosphat, Diaryliodoniumtristrifluormethylsulfonylmethid wie Diphenyliodoniumhexafluoroantimonat, Diaryliodoniumtetrakis-(pentafluorophenyl)-borat wie Diphenyliodoniumtetrakis-(pentafluorophenyl)-borat,, (4-n-Desiloxyphenyl)-phenyliodoniumhexafluoroantimonat, [4-(2-Hydroxy-n-tetradesiloxy)-phenyl]-phenyliodoniumhexafluoroantimonat, [4-(2-Hydroxy-n-tetradesiloxy)-phenyl]-phenyliodoniumtrifluorosulfonat, [4-(2-Hydroxy-n-tetradesiloxy)-phenyl]-phenyliodoniumhexafluorophosphat, [4-(2-Hydroxy-n-tetradesiloxy)-phenyl]-phenyliodoniumtetrakis-(pentafluorophenyl)-borat, Bis-(4-tert-butylphenyl)-iodoniumhexafluoroantimonat, Bis-(4-tert-butylphenyl)-iodoniumhexafluorophosphat, Bis-(4-tert-butylphenyl)-iodoniumtrifluorosulfonat, Bis-(4-tert-butylphenyl)-iodoniumtetrafluoroborat, Bis-(dodecylphenyl)-iodoniumhexafluoroantimonat, Bis-(dodecylphenyl)-iodoniumtetrafluoroborat, Bis-(dodecylphenyl)-iodoniumhexafluorophosphat, Bis-(dodecylphenyl)-iodoniumtrifluoromethylsulfonat, Di-(dodecylphenyl)-iodoniumhexafluoroantimonat, Di-(dodecylphenyl)-iodoniumtriflat, Diphenyliodoniumbisulfat, 4,4'-Dichlorodiphenyliodoniumbisulfat, 4,4'-Dibromodiphenyliodoniumbisulfat, 3,3'-Dinitrodiphenyliodoniumbisulfat, 4,4'-Dimethyldiphenyliodoniumbisulfat, 4,4'-Bissuccinimidodiphenyliodoniumbisulfat, 3-Nitrodiphenyliodoniumbisulfat, 4,4'-Dimethoxydiphenyliodoniumbisulfat, Bis-(dodecylphenyl)-iodoniumtetrakis-(pentafluorophenyl)-borat, (4-Octyloxyphenyl)-phenyliodoniumtetrakis-(3,5-bis-trifluoromethylphenyl)-borat und (Tolylcumyl)-iodoniumtetrakis-(pentafluorophenyl)-borat,
und

- Ferrocenium-Salze (siehe zum Beispiel EP 542 716 B1) wie $\eta_5$-(2,4-cyclopentadien-1-yl)-[(1,2,3,4,5,6,9)-(1-methylethyl)-benzol]-eisen.

Beispiele für kommerzialisierte Photoinitiatoren sind Cyracure UVI-6990, Cyracure UVI-6992, Cyracure UVI-6974 und Cyracure UVI-6976 der Firma Union Carbide, Optomer SP-55, Optomer SP-150, Optomer SP-151, Optomer SP-170 und Optomer SP-172 der Firma Adeka, San-Aid SI-45L, San-Aid SI-60L, San-Aid SI-80L, San-Aid SI-100L, San-Aid SI-110L, San-Aid SI-150L und San-Aid SI-180L der Firma Sanshin Chemical, SarCat CD-1010, SarCat CD-1011 und SarCat CD-1012 der Firma Sartomer, Degacure K185 der Firma Degussa, Rhodorsil Photoinitiator 2074 der Firma Rhodia, CI-2481, CI-2624, CI-2639, CI-2064, CI-2734, CI-2855, CI-2823 und CI-2758 der Firma Nippon Soda, Omnicat 320, Omnicat 430, Omnicat 432, Omnicat 440, Omnicat 445, Omnicat 550, Omnicat 550 BL und Omnicat 650 der Firma IGM Resins, Daicat II der Firma Daicel, UVAC 1591 der Firma Daicel-Cytec, FFC 509 der Firma 3M, BBI-102, BBI-103, BBI-105, BBI-106, BBI-109, BBI-110, BBI-201, BBI, 301, BI-105, DPI-105, DPI-106, DPI-109, DPI-201,

DTS-102, DTS-103, DTS-105, NDS-103, NDS-105, NDS-155, NDS-159, NDS-165, TPS-102, TPS-103, TPS-105, TPS-106, TPS-109, TPS-1000, MDS-103, MDS-105, MDS-109, MDS-205, MPI-103,, MPI-105, MPI-106, MPI-109, DS-100, DS-101, MBZ-101, MBZ-201, MBZ-301, NAI-100, NAI-101, NAI-105, NAI-106, NAI-109, NAI-1002, NAI-1003, NAI-1004, NB-101, NB-201, NDI-101, NDI-105, NDI-106, NDI-109, PAI-01, PAI-101, PAI-106, PAI-1001, PI-105, PI-106, PI-109, PYR-100, SI-101, SI-105, SI-106 und SI-109 der Firma Midori Kagaku, Kayacure PCI-204, Kayacure PCI-205, Kayacure PCI-615, Kayacure PCI-625, Kayarad 220 und Kayarad 620, PCI-061T, PCI-062T, PCI-020T, PCI-022T der Firma Nippon Kayaku, TS-01 und TS-91 der Firma Sanwa Chemical, Deuteron UV 1240 der Firma Deuteron, Tego Photocompound 1465N der Firma Evonik, UV 9380 C-D1 der Firma GE Bayer Silicones, FX 512 der Firma Cytec, Silicolease UV Cata 211 der Firma Bluestar Silicones und Irgacure 250, Irgacure 261, Irgacure 270, Irgacure PAG 103, Irgacure PAG 121, Irgacure PAG 203, Irgacure PAG 290, Irgacure CGI 725, Irgacure CGI 1380, Irgacure CGI 1907 und Irgacure GSID 26-1 der Firma BASF.

Dem Fachmann sind weitere Systeme bekannt, die ebenfalls erfindungsgemäß als Härter einsetzbar sind. Photoinitiatoren werden unkombiniert oder als Kombination von zwei oder mehreren Photoinitiatoren eingesetzt.

Vorteilhaft sind Photoinitiatoren, die Absorption bei kleiner 350 nm und vorteilhaft bei größer 250 nm aufweisen. Initiatoren, die oberhalb 350 nm absorbieren, beispielsweise im Bereich violetten Lichts, sind ebenfalls einsetzbar. Sulfonium-basierende Photoinitiatoren werden besonders bevorzugt eingesetzt, da sie eine vorteilhafte UV-Absorptionscharakteristik aufweisen.

Der Anteil photochemisch aktivierbarer Härter (Initiatoren) für die kationische Härtung bezogen auf die Gesamtzusammensetzung liegt vorzugsweise bei mindestens 0,1 Gew.-% und höchstens 5 Gew.-%, bevorzugt bei mindestens 0,3 Gew.-% und höchstens 3 Gew.-%.

Es ist auch vorteilhaft, Härter zu wählen, die sich durch beide Stimulationsmethoden, durch Wärme und durch (UV) Strahlung, aktivieren lassen. Es können auch Kombinationen von thermisch und photochemisch aktivierbaren Härtern (Initiatoren) zur Anwendung kommen.

Auch wenn TAG- und PAG-Systeme in Kombination mit den hier offenbarten epoxidfunktionalisierten (Co)Polymeren bevorzugt werden, so sind alternativ oder in Kombination auch andere Härtersysteme denkbar. Auch hier werden Systeme bevorzugt, die in der Formulierung Latenz aufweisen.

Als Beispiele seien latentreaktive Diamine oder multifunktionelle Amine, Dicarbonsäuren oder multifunktionelle Carbonsäuren, difunktionelle Säureanhydride oder multifunktionelle Säureanhydride, primäre Dithiole oder multifunktionelle primäre Thiole genannt. Besonders vorteilhaft im Hinblick auf Latenz sind solche Reaktionspartner, die bei Raumtemperatur fest und nicht in dem erfindungsgemäßen Polymer oder einer Mischung, die dieses Polymer enthält, im nicht erweichten Zustand löslich sind aber im erweichten Zustand löslich oder beide Schmelzen miteinander mischbar sind.

Denkbar sind auch Härter (Initiatoren), die gekapselt vorliegen und unter Wärmeeinfluss in der Filmmatrix verteilt werden und dann zur Reaktion führen können.

Das epoxidfunktionalisierte (Co)Polymer weist im nicht gehärteten Zustand eine erste Glasübergangstemperatur auf, die unterhalb derjenigen Temperatur liegt, bei der der Klebeverbund bestehend aus das epoxidfunktionalisierte (Co)Polymer enthaltendem Klebefilm und zu verklebenden Substraten durch Lamination erstellt wird. Die für die Laminierung genutzte Temperatur wird im Sinne dieser Erfindung "Laminiertemperatur" genannt. Die Temperaturdifferenz zwischen der Laminiertemperatur und Glasübergangstemperatur des ungehärteten (Co)Polymers liegt in diesem Fall vorzugsweise bei mindestens 20 °C, insbesondere bei mindestens 40 °C, wobei die Laminiertemperatur oberhalb der Glasübergangstemperatur liegt.

Darüber hinaus ist es vorteilhaft, wenn das härtbare Reaktivklebesystem mit dem epoxidfunktionalisierten (Co)Polymer im nicht gehärteten Zustand eine erste Glasübergangstemperatur auf, die unterhalb derjenigen Temperatur liegt, bei der der Klebeverbund bestehend aus Reaktivklebefilm und zu verklebenden Substraten durch Lamination erstellt wird, so dass die Formulierung unter den Laminierbedingungen unter Druck in einem definierten Zeitraum ein ausreichendes Benetzen auf dem Substrat / den Substraten erlaubt. Die Temperaturdifferenz zwischen der Laminiertemperatur und Glasübergangstemperatur liegt vorzugsweise bei mindestens 20 °C, insbesondere bei mindestens 40 °C oder sogar bei mindestens 100 °C, wobei die Laminiertemperatur oberhalb der Glasübergangstemperatur liegt. Die Laminiertemperatur liegt vorteilhaft zwischen 40 °C und 100 °C, insbesondere zwischen 50 °C und 80 °C. Sie liegt unterhalb der Aktivierungstemperatur, also derjenigen Temperatur, bei der die Härtung der härtbaren Klebemasse initiiert wird, sofern das Klebesystem thermisch aktivierbar ist. Die Differenz zwischen Laminiertemperatur und Aktivierungstemperatur liegt dann vorteilhaft bei mindestens 20 °C, insbesondere bei mindestens 40 °C.

Statt der Aktivierungstemperatur kommt bei strahlenchemisch härtbaren Klebesystemen (UV) Strahlung zum Einsatz. Dies kann bei der Laminiertemperatur - und dies ist bevorzugt - oder einer anderen Temperatur erfolgen.

Das epoxidfunktionalisierte (Co)Polymer ist unter Standardbedingungen (23 °C, 50 % rel. F) bevorzugt nicht haftklebrig. Es weist im nicht ausreagierten Zustand eine Glasübergangstemperatur von mindestens 0 °C, vorzugsweise von mindestens 25 °C auf. Dies kann vorteilhaft genutzt werden, damit auch eine Klebformulierung mit diesem (Co)Polymer nicht haftklebrig ist. Diese Charakteristik erlaubt ein vorteilhaftes Platzieren der Klebeprodukte im Verklebungsprozess und kein vorzeitiges Anhaften an eine Oberfläche in falscher Position.

Darüber hinaus zeigt sich diese Charakteristik vorteilhaft für thermisch härtbare Reaktivklebesysteme, da etwaige Reaktivität im glasigen / zähelastischen Zustand signifikant (kinetisch) herabgesetzt ist und man dadurch eine verbesserte Latenz erreicht. Das Polymer kann aber auch leicht haftklebrig sein.

Die Klebemasse kann unter Standardbedingungen (23 °C, 50 % rel. Luftfeuchtigkeit) haftklebrig sein. Sie weist dann im nicht gehärteten Zustand eine Glasübergangstemperatur von unter 0 °C, vorzugsweise von höchstens -25 °C auf. Diese Charakteristik vereinfacht Konfektionierprozesse wie die Vordimensionierung von Klebebandabschnitten für den späteren Verklebungsprozess oder auch Laminierschritte bei der Herstellung von Klebeproduktaufbauten und Bauteilverklebung. Im Laminierprozess braucht in diesem Fall nicht unbedingt mit erhöhter Temperatur gearbeitet zu werden sondern kann bei Raumtemperatur laminiert werden, da bereits über den Laminationsdruck ein ausreichender Kontakt zwischen Klebmasse und den zu verklebenden Substraten realisiert werden kann. Für die Härtung bietet sich in diesem Fall vorzüglich UV-Strahlung an. Thermische Aktivierung ist jedoch auch möglich.

Unter dem Begriff "Haftklebemasse" beziehungsweise "haftklebrige Klebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur, also 23 °C) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebendes Substrat hinreichend zu benetzen, damit sich zwischen der Masse und dem Substrat für die Haftung hinreichende Wechselwirkungen ausbilden können.

Die Klebemasse kann unter Standardbedingungen (23 °C, 50 % rel. Luftfeuchtigkeit) aber auch nicht oder nur gering haftklebrig sein. Um dies einzustellen, weist sie dann im nicht gehärteten Zustand eine Glasübergangstemperatur von typischerweise mindestens 0 °C, vorzugsweise von mindestens 25 °C auf. Diese Charakteristik erlaubt ein vorteilhaftes Platzieren der Klebeprodukte im Verklebungsprozess und kein vorzeitiges Anhaften an eine Oberfläche in falscher Position. Darüber hinaus zeigt sich diese Charakteristik vorteilhaft für latentreaktive Klebesysteme, da etwaige Reaktivität im glasigen / zähelastischen Zustand signifikant (kinetisch) herabgesetzt ist und man dadurch eine verbesserte Latenz erreicht. Für den Laminierprozess ist dann neben Druck aber auch eine erhöhte Temperatur erforderlich.

Epoxidfunktionalisierte (Co)Polymere können wie beschrieben in Reaktivklebemassen zum Einsatz kommen. Sie werden dann neben den Härtern (A) vorteilhaft mit weiteren Bestandteile kombiniert, die die Eigenschaften des Klebesystems wunschgemäß einstellen. In diesem Zusammenhang seien Filmbildner (B), Klebharze (C), niederviskose Reaktivharze (D), Füllstoffe (E), Adhäsionspromotoren / Haftvermittler (F) und weitere Zuschlagsstoffe / Additive (G) genannt.

Filmbildner (B)

Als Filmbildner für erfindungsgemäße Reaktivklebemassen sind thermoplastische Materialien, Elastomere und thermoplastische Elastomere geeignet. Sie werden insbesondere so ausgewählt, dass sie in Kombination mit den weiteren Formulierungsbestandteilen solche Klebemassen zugänglich machen, die vorteilhaft im Hinblick auf Verarbeitbarkeit beim Klebebandhersteller einerseits und Klebebandanwender andererseits, im Hinblick auf klebtechnische Eigenschaften und im Hinblick auf weitere Verbesserung der Dimensionsstabilität der Klebefilme in Bezug auf zum Beispiel die Darreichung des Klebeprodukts oder das Ausquetschverhalten in einem Heißlaminierprozess, um nur einige besonders wichtige Anforderungen zu nennen, sind. Ihr Anteil liegt typischerweise bei höchstens 75 Gew.-% oder bei höchstens 50 Gew.-%. Es kann auch auf solche Polymere verzichtet werden.

In vorteilhafter Vorgehensweise werden thermoplastische Materialien als Matrixpolymere (B) eingesetzt. Beispiele sind semikristalline Polyolefine und Ethylen-Vinylacetat-Copolymere (EVA). Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften des Polymers steuern, wie zum Beispiel die Erweichungstemperatur und/oder spezielle mechanische Eigenschaften.

Sehr vorteilhaft sind Elastomere als Matrixpolymere (B) einsetzbar. Beispielhaft seien Kautschuk oder Synthesekautschuk als Ausgangsmaterial für die Klebemassen genannt. Hier sind vielfältige Variationsmöglichkeiten gegeben, sei es für Kautschuke aus der Gruppe der Naturkautschuke oder der Synthesekautschuke oder sei es aus einem beliebigen Verschnitt aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), EPDM, der Polybutylene oder der Polyisobutylene gewählt werden können. Elastomere können

auch (teil)hydriert sein. Sehr vorteilhaft sind Nitrilkautschuke, insbesondere heißpolymerisierte, und solche mit einem Acrylnitril-Gehalt zwischen 15 % und 50 %, bevorzugt zwischen 30 % und 45 % sowie einer Mooney-Viskosität (ML 1+4, 100 °C) zwischen 30 und 110, bevorzugt zwischen 60 und 90.

Sehr vorteilhaft sind auch Poly(meth)acrylate, die aus (Co)Monomeren (b), (c) und/oder (d) aufgebaut sind und eine gewichtsmittlere Molmasse von mindestens 250 000 g/mol und typischerweise höchstens 5 000 000 g/mol, insbesondere von mindestens 500 000 g/mol und höchstens 2 000 000 g/mol aufweisen. Die Glasübergangstemperatur dieser Poly(meth)acrylate kann insbesondere unterhalb 25 °C liegen oder sogar unterhalb 0 °C und insbesondere unterhalb -25 °C. Auf diese Weise sind haftklebrige Reaktivklebesysteme zugänglich.

Außerdem vorteilhaft sind thermoplastische Elastomere und hier insbesondere Block-, Stern- und/oder Pfropfcopolymere mit einer Molmasse Mw (Gewichtsmittel) von 300.000 g/mol oder kleiner, bevorzugt 200.000 g/mol oder kleiner. Kleinere Molgewichte sind dabei aufgrund ihrer besseren Verarbeitbarkeit bevorzugt. Die Molmasse sollte nicht unter 50 000 g/mol liegen. Spezifische Beispiele sind Styrol-Butadien-Blockcopolymere (SBS), Styrol-Isopren-Blockcopolymere (SIS), Styrol-(Isopren/Butadien)-Blockcopolymere (SIBS) und (teil)hydrierte Varianten wie Styrol-(Ethylen/Butylen)-Blockcopolymere (SEBS), Styrol-(Ethylen/Propylen)-Blockcopolymere (SEPS, SEEPS), Styrol-(Butylen/Butyl)-Blockcopolymere (SBBS), Styrol-isoButylen-Blockcopolymere (SiBS) und Polymethylmethacrylat-Polyacrylat-Blockcopolymere. Diese Blockcopolymere können als lineare oder mehrarmige Struktur eingesetzt werden, als Diblockcopolymer, Triblockcopolymer oder Multiblockcopolymer sowie als Gemische verschiedender Arten.

Weitere vorteilhafte Beispiele für thermoplastische Elastomere sind thermoplastische Polyurethane (TPU). Polyurethane sind chemisch und/oder physikalisch vernetzte Polykondensate, die typischerweise aus Polyolen und Isocyanaten aufgebaut werden und Weich- und Hartsegmente enthalten. Die Weichsegmente bestehen beispielsweise aus Polyestern, Polyethern, Polycarbonaten, im Sinne dieser Erfindung jeweils bevorzugt aliphatischer Natur, und Polyisocyanathartsegmenten. Je nach Art und Einsatzverhältnis der einzelnen Komponenten sind Materialien erhältlich, die im Sinne dieser Erfindung vorteilhaft eingesetzt werden können. Rohstoffe, die dem Formulierer hierzu zur Verfügung stehen, sind zum Beispiel in EP 894 841 B1 und EP 1 308 492 B1 genannt.

Weiterhin sind Polyolefin-basierte thermoplastische Elastomere, Polyetheresterelastomere, Polyamide wie Polyesteramide, Polyetheresteramide, Polycarbonatesteramide und Polyetherblockamide als thermoplastische Elastomere für Matrixpolymere (B) einsetzbar.

Kommen Matrixpolymere (B) zum Einsatz, dann werden solche ausgewählt, die vor der Initiierung des Härtungsprozesses im Wesentlichen keine oder insbesondere gar keine Reaktion mit Epoxid-Funktionalitäten eingehen oder keine Reaktionen der Epoxid-Funktionalitäten initiieren oder katalysieren oder die Reaktion mit Epoxid-Funktionalitäten anderweitig unterbunden ist.

Klebharze (C)

Das hier offenbarte epoxidfunktionalisierte (Co)Polymer wird optional mit zumindest einer Sorte eines Klebharzes kombiniert, vorteilhaft mit solchen, die mit dem epoxidfunktionalisierten (Co)Polymer und/oder dem Matrixpolymer (B) verträglich sind. Der Anteil in der Gesamtklebemasse liegt bei höchstens 40 Gew.-%, bevorzugt höchstens 25 Gew.-% und kann auch bei 0 Gew.-% liegen.

Es ist vorteilhaft, wenn dieses Klebharz eine Klebharzerweichungstemperatur (ASTM E28) von größer 25 °C, insbesondere von größer 80 °C aufweist.

Als Klebharze (C) können in der Klebemasse zum Beispiel partiell oder vollständig hydrierte oder disproportionierte Harze auf Basis von Kolophonium und Kolophoniumderivaten, Inden-Coumaron-Harze, Terpen-Phenolharze, Phenolharze, hydrierte Polymerisate des Dicyclopentadiens, partiell, selektiv oder vollständig hydrierte Kohlenwasserstoffharze auf Basis von C5-, C5/C9- oder C9-Monomerströmen, Polyterpenharze auf Basis von a-Pinen und/oder β-Pinen und/oder δ-Limonen, hydrierte Polymerisate von bevorzugt reinen C8- und C9-Aromaten eingesetzt werden. Vorgenannte Klebharze können sowohl allein als auch im Gemisch eingesetzt werden.

Um eine hohe Alterungs- und UV-Stabilität zu gewährleisten, sind hydrierte Harze mit einem Hydrierungsgrad von mindestens 90 %, vorzugsweise von mindestens 95 % bevorzugt.

Des Weiteren sind insbesondere in Kombination mit unpolaren Filmbildnern unpolare Harze mit einem DACP-Wert (diacetone alcohol cloud point) oberhalb von 30 °C und einem MMAP-Wert (mixed methylcylohexane aniline point) von größer 50 °C, insbesondere mit einem DACP-Wert oberhalb von 37 °C und einem MMAP-Wert größer 60 °C bevorzugt. Der DACP-Wert und der MMAP-Wert geben jeweils die Löslichkeit in einem bestimmten Lösemittelgemisch an. Zur Definition und Bestimmung des DACP- und MMAP-Werts sei auf C. Donker, PSTC Annual Technical Proceedings, S. 149-164, Mai 2001 verwiesen. Bzgl. MMAP kann auch ASTM C611 konsultiert werden.

Kommen Klebharze (C) zum Einsatz, dann werden solche ausgewählt, die vor der Initiierung des Härtungsprozesses im Wesentlichen keine oder insbesondere gar keine Reaktion mit Epoxid-Funktionalitäten eingehen oder keine Reaktionen der Epoxid-Funktionalitäten initiieren oder katalysieren oder die Reaktion mit Epoxid-Funktionalitäten anderweitig unterbunden ist.

Niederviskose Reaktivharze (D)

Optional aber vorteilhaft können in Kombination mit hier offenbarten epoxidfunktionalisierten (Co)Polymeren niedermolekulare Reaktivharze eingesetzt werden. Sie kommen zu einem Anteil in der Gesamtformulierung von höchstens 50 Gew.-%, bevorzugt von höchstens 25 Gew.-%, sehr bevorzugt von höchstens 10 Gew.-% zum Einsatz. Bei diesen niederviskosen Reaktivharzen handelt es sich insbesondere um cyclische Ether, also Verbindungen, die zumindest eine Oxiran-Gruppe tragen, oder Oxetane. Sie können aromatischer oder insbesondere aliphatischer oder cycloaliphatischer Natur sein. Einsetzbare Reaktivharze können monofunktionell, difunktionell, trifunktionell, tetrafunktionell oder höher funktionell bis zu polyfunktionell gestaltet sein, wobei sich die Funktionalität auf die cyclische Ethergruppe bezieht.

Beispiele, ohne sich einschränken zu wollen, sind 3,4-Epoxycyclohexylmethyl-3',4'-epoxycyclohexancarboxylat (EEC) und Derivate, Dicyclopendadiendioxid und Derivate, 3-Ethyl-3-oxetanmethanol und Derivate, Tetrahydrophthalsäurediglycidylester und Derivate, Hexahydrophthalsäurediglycidylester und Derivate, 1,2-Ethandiglycidylether und Derivate, 1,3-Propandiglycidylether und Derivate, 1,4-Butandioldiglycidylether und Derivate, höhere 1,n-Alkandiglycidylether und Derivate, Bis-[(3,4-epoxycyclohexyl)methyl]-adipat und Derivate, Vinylcyclohexyldioxid und Derivate, 1,4-Cyclohexandimethanol-bis-(3,4-epoxycyclohexancarboxylat) und Derivate, 4,5-Epoxytetrahydrophthalsäurediglycidylester und Derivate, Bis-[1-ethyl(3-oxetanyl)methyl)ether und Derivate, Pentaerythritoltetraglycidylether und Derivate, Bisphenol-A-Digylcidylether (DGEBA), hydriertes Bisphenol-A-Diglycidylether, Bisphenol-F-Diglycidylether, hydriertes Bisphenol-F-Diglycidylether, Epoxyphenol-Novolaks, hydrierte Epoxyphenol-Novolaks, Epoxycresol-Novolaks, hydrierte Epoxycresol-Novolaks, 2-(7-Oxabicyclospiro(1,3-dioxan-5,3'-(7-oxabicyclo[4.1.0]-heptan)), 1,4-Bis((2,3-epoxypropoxy)methyl)cyclohexan. Auch hier werden (cyclo)aliphatische Epoxide bevorzugt. Verbindungen nach WO 2013/156509 A2 können als Reaktivharze ebenfalls im Sinne dieser Erfindung eingesetzt werden.

Reaktivharze können in ihrer monomeren oder auch dimeren, trimeren, usw. bis hin zu ihrer oligomeren Form eingesetzt werden, insbesondere sofern das gewichtsmittlere Molekulargewicht 5 000 g/mol nicht erreicht. Da diese Reaktivharze typischerweise niedrigviskos sind, bergen sie die Gefahr, dass ein zu hoher Anteil von ihnen in einer Klebeformulierung zu einer zu hohen Ausquetschneigung führt. Es wird daher ein möglichst niedriger Anteil in der Gesamtrezeptur bevorzugt (höchstens 25 Gew.-%, bevorzugt höchstens 10 Gew.-%). Bis zu 50 Gew.-% können nur dann eingesetzt werden, wenn der Anteil an epoxidfunktionalisiertem (Co)Polymer bei mindestens 50 Gew.-% liegt und die Summe des Anteils an (Co)Monomeren (a) und ggf. (b) im epoxidfunktionalisierten (Co)Polymer bei mindestens 50 Gew.-% liegt

Gemische von Reaktivharzen untereinander aber auch mit anderen coreaktiven Verbindungen wie Alkoholen (monofunktionell oder mehrfach funktionell) oder Vinylethern (monofunktionell oder mehrfach funktionell) sind ebenfalls möglich. Es kann auch vollständig auf niedermolekulare Reaktivharze verzichtet werden.

Füllstoffe (E)

Kommen Füllstoffpartikel in Kombination mit epoxidfunktionalisierten (Co)Polymeren zur Anwendung so können sie in ihrer Struktur bevorzugt kugelförmig, stäbchenförmig oder plättchenförmig vorliegen. Separierte Partikel, oftmals auch Primärpartikel genannt, sind dabei ebenso erfindungsgemäß wie aus mehreren Primärpartikeln gebildete Aggregate. Solche Systeme zeigen oft eine fraktale Überstruktur. Werden die Partikel aus Kristalliten gebildet, dann hängt die Primärpartikelform von der Art des Kristallgitters ab. Plättchenförmige Systeme können auch in Form von Schichtstapeln vorliegen. Kommen Füllstoffe zur Anwendung, dann typischerweise zu bis zu 15 Gew.-%.

In einer vorteilhaften Ausführungsform dieser Erfindung liegt eine Füllstoffsorte in der Klebeformulierung im Wesentlichen in Form von singulären kugelförmigen Partikeln vor. Die Partikeldurchmesser weisen dann Werte von kleiner als 500 nm, bevorzugt von kleiner als 100 nm, sehr bevorzugt von kleiner 25 nm auf. In einer weiteren vorteilhaften Auslegung dieser Erfindung liegt die zumindest eine funktionalisierte Füllstoffsorte in der Klebemasse im Wesentlichen in Form von singulären plättchenförmigen Partikeln vor. Die Schichtdicke solcher Plättchen weist dann Werte von bevorzugt kleiner als 10 nm und einen größten Durchmesser von bevorzugt kleiner als 1000 nm auf. In einer weiteren vorteilhaften Auslegung dieser Erfindung liegt die zumindest eine Füllstoffsorte in der Klebemasse im Wesentlichen in Form von singulären stäbchenförmigen Partikeln vor. In diesem Fall weisen diese Stäbchen einen Durchmesser von kleiner als 100 nm und eine Länge von kleiner als 15 µm auf. Die Stäbchen können auch gekrümmt vorliegen und/oder flexibel sein. Weiterhin ist es im Sinne dieser Erfindung vorteilhaft möglich, dass die zumindest eine Füllstoffsorte in der Klebemasse in Form von Primärpartikelaggregaten vorliegt. Diese Aggregate weisen einen Gyrationsradius (zu verstehen analog dem von Polymeren bekannten Terminus "Gyrationsradius") von kleiner als 1000 nm, bevorzugt von kleiner als 250 nm auf. Besonders bevorzugt werden solche Füllstoffpartikel im Sinne dieser Erfindung eingesetzt, deren räumliche Ausdehnung in zumindest einer Richtung kleiner als 250 nm ist, bevorzugt kleiner als 100 nm, sehr bevorzugt kleiner als 50 nm. Es ist außerdem im Sinne dieser Erfindung möglich, Kombinationen aus den zuvor genannten Füllstoffarten einzusetzen.

Typische und weitere erfindungsgemäß vorteilhafte Verbindungsklassen für Füllstoffe sind Oxide anorganischer Natur - insbesondere Metalloxide und/oder Halbmetalloxide -, Salze der Erdalkalimetalle sowie Minerale auf Silikatbasis, insbesondere Tonminerale und Tone. Zu den erfindungsgemäß einsetzbaren amorphen oder kristallinen Metalloxiden zählen zum Beispiel Siliziumdioxid, Aluminiumoxid, Titandioxid, Zirkoniumdioxid und Zinkoxid. Dem Fachmann sind weitere Systeme geläufig, die ebenso erfindungsgemäß eingesetzt werden können. Erdalkalimetallsalze umfassen beispielsweise Carbonate, Sulfate, Hydroxide, Phosphate und Hydrogenphosphate des Magnesiums, des Calciums, des Strontiums und des Bariums. Zu den erfindungsgemäß einsetzbaren Tonmineralen und Tonen zählen insbesondere silikatische Systeme wie Serpentine, Kaoline, Talkum, Pyrophyllit, Smectite wie insbesondere Montmorillonit, Vermiculite, Illite, Glimmer, Sprödglimmer, Chlorite, Sepiolith und Palygorskit. Weiterhin können synthetische Tonminerale wie Hectorite sowie deren verwandte Systeme wie zum Beispiel Laponite ® der Fa. Laporte und Fluorhectorite sowie deren verwandte Systeme wie zum Beispiel Somasif ® der Fa. Co-Op erfindungsgemäß eingesetzt werden. Füllstoffpartikel können an ihrer Oberfläche funktionalisiert sein, hydrophob oder hydrophil eingestellt sein. Besonders vorteilhaft ist eine Funktionalisierung mittels Epoxid-haltigen Verbindungen, die an der Härtungsreaktion teilnehmen können.

Die Füllstoffe sind nicht zwingend, die Klebemasse funktioniert auch, ohne dass diese einzeln oder in beliebiger Kombination zugesetzt sind. Auch unter den optionalen Füllstoffen werden solche ausgewählt, die vor der Initiierung des Härtungsprozesses im Wesentlichen keine oder insbesondere gar keine Reaktion mit Epoxid-Funktionalitäten eingehen oder keine Reaktionen der Epoxid-Funktionalitäten initiieren oder katalysieren oder die Reaktion mit Epoxid-Funktionalitäten anderweitig unterbunden ist.

Haftvermittler (F)

In Kombination mit Comonomeren (d) auf Silan-Basis, sofern solche zum Einsatz kommen, oder auch alternativ können in Kombination mit epoxidfunktionalisierten (Co)Polymeren als Haftvermittler weitere Silane verwendet werden, die nicht durch Polymerisation in die hier offenbarten epoxidfunktionalisierten (Co)Polymere eingebaut sind. Im Sinne dieser Erfindung einsetzbare Beispiele für Silane sind, ohne sich einschränken zu wollen, Methyltrimethoxysilan, Methyltriethoxysilan, Dimethyldimethoxysilan, Dimethyldiethoxysilan, Trimethylethoxysilan, Ethyltrimethoxysilan, Propyltrimethoxysilan, Propyltriethoxysilan, iso-Butyltrimethoxysilan, iso-Butyltriethoxysilan, Octyltrimethoxysilan, Octyltriethoxysilan, iso-Octyltrimethoxysilan, iso-Octyltriethoxysilan, Hexadecyltrimethoxysilan, Hexadecyltriethoxysilan, Octadecylmethyldimethoxysilan, Phenyltrimethoxysilan, Phenyltriethoxysilan, Cyclohexylmethyldimethoxysilan, Dicyclopentyldimethoxysilan.

Ein Beispiel für silylfunktionalisierte Oligomere oder Polymere, die erfindungsgemäß zum Einsatz kommen können, ist Polyethylenglykol, das mit einer Trimethoxysilan-Gruppe verknüpft ist.

Weitere Beispiele für einsetzbare Silane, die zumindest eine Funktionalisierung tragen, sind, Vinyltrimethoxysilan, Vinyltriethoxysilan, Vinyl-tri(2-methoxyethoxy)-silan, Vinyltriisopropoxysilan, Vinyldimethoxymethylsilan, Vinyltriacetoxysilan, , 3-Glycidyloxypropyltrimethoxysilan, 3-Glycidyloxypropyltriethoxysilan, 2-(3,4-Epoxycyclohexyl)-ethyltriethoxysilan, 3-Glycidyloxypropyldiethoxymethylsilan, 3-Methacryloyloxypropyltrimethoxysilan, 3-Methacryloyloxypropyltriethoxysilan, 3-Methacryloyloxypropyltriisopropoxysilan, 3-Methacryloyloxypropyldimethoxymethylsilan, 3-Methacryloyloxypropyldiethoxymethylsilan, 3-Chloropropyltrimethoxysilan, 3-Chloropropyltriethoxysilan, 3-Ureidopropyltrimethoxysilan, 3-Ureidopropyltriethoxysilan, 2-Hydroxy-4-(3-triethoxysilylpropoxy)-benzophenon, 4-(3'-Chlorodimethylsilylpropoxy)-benzophenon.

Weitere Additive (G)

Als weitere optionale Bestandteile können als Zuschlagstoffe / Additive (G) dem epoxidfunktionalisierten (Co)Polymer bzw. der darauf basierenden Klebemasse übliche Zuschlagstoffe wie Alterungsschutzmittel (Antiozonantien, Antioxidantien, Lichtschutzmittel usw.) zugesetzt sein.

Als mögliche Additive des Klebesystems seien folgende genannt:

- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel wie rheologisch wirksame Additive (zum Beispiel Verdicker)
- Netzadditive
- Blähmittel wie chemische Schäumungsmittel und/oder expandierte oder expandierbare Mikroballons und/oder Hohlkugeln wie Glashohlkugeln.
- Haftvermittler
- Verträglichkeitsvermittler / Kompatibilisatoren

- Farbmittel / Pigmente

Die Zuschlagstoffe oder Additive sind nicht zwingend, ein Vorteil der erfindungsgemäßen Klebemasse ist, dass diese ihre vorteilhaften Eigenschaften aufweist, auch ohne dass zusätzliche Additive einzeln oder in beliebiger Kombination zugesetzt sind. Dennoch kann es im Einzelnen vorteilhaft und wünschenswert sein, bestimmte weitere Eigenschaften der Klebemasse durch Additivzugabe zu justieren.
Auch unter den optionalen Zuschlagsstoffen beziehungsweise Additiven werden solche ausgewählt, die vor der Initiierung der Härtungsreaktion im Wesentlichen keine oder insbesondere gar keine Reaktion mit Epoxid-Funktionalitäten eingehen oder die Reaktionen der Epoxid-Funktionalitäten weder initiieren noch katalysieren, oder solche, bei denen die Reaktion mit Epoxid-Funktionalitäten anderweitig unterbunden ist.

*Anwendungsbeispiele*

Als Beispiele für Anwendungen, in denen die hier offenbarten epoxidfunktionalisierten (Co)Polymere sehr vorteilhaft genutzt werden können, seien folgende Ausführungen aufgeführt. Erfingungsgemäße Reaktivklebesysteme basierend auf Formulierungen, die hier offenbarte epoxidfunktionalisierte (Co)Polymere enthalten, eignen sich besonders zum Einsatz in Form von Klebefilmen, die zumindest eine Schicht dieses Klebesystems enthalten.
Die Schichtdicke der zumindest einen Schicht einer erfindungsgemäßen härtbaren Reaktivklebemasse in solchen Reaktivklebebändern liegt typischerweise zwischen zumindest 10 μm und höchstens 500 μm, bevorzugt zwischen zumindest 20 μm und höchstens 250 μm. Nützliche Schichtdicken betragen 30 μm, 50 μm, 75 μm, 100 μm, 125 μm, 150 μm und 200 μm (jeweils im Rahmen der üblichen Fehlertoleranzen).
Bei den Reaktivklebebändern handelt es sich insbesondere um doppelseitig klebende Klebeprodukte auch wenn einseitig klebende Klebeprodukte ebenfalls möglich sind. Solche Klebeprodukte enthaltend zumindest eine Schicht einer härtbaren Klebemasse mit einem epoxidfunktionalisierten (Co)Polymer kommen im einfachsten Fall in einschichtiger Form zum Einsatz (so dass die härtbare Klebemasseschicht und das Reaktivklebeband identisch sind), aufgebracht auf ein wieder ablösbares (temporäres) Trägermaterial. Als temporäres Trägermaterial bieten sich alle Trennfolien und -papiere an, die aus dem Stand der Technik bekannt sind und ein- oder beidseitig mit einer Trennschicht ausgerüstet sind. Papiere können auch ein- oder beidseitig mit Polyethylen oder Polypropylen beschichtet sein. Es können auch zwei Lagen eines wiederablösbaren Trägermaterials zum Einsatz kommen, so dass Ober- und Unterseite des Klebefilms abgedeckt sind, auch wenn das Produkt nicht aufgewickelt vorliegt. Ein temporäres Trägermaterial ist nicht Teil des verklebten Verbunds. Es wird vor Verklebung der Substrate vom Reaktivklebeband entfernt.
Reaktivklebebänder enthaltend zumindest eine Schicht einer erfindungsgemäßen härtbaren Klebemasse können zudem ein weiteres Trägermaterial enthalten, das auch nach Verklebung Teil des Verbunds ist (Permanentträger). Hierzu bieten sich ebenfalls Folien und Papiere aber auch Gelege, Gewebe und Gewirke an. Die Oberflächen dieser Trägermaterialien können jeweils unabhängig voneinander chemisch (Primer, Plasma) und/oder physikalisch (Corona, Flamme, Plasma) so vorbehandelt sein, dass eine besonders gute Verankerung der härtbaren Klebefilmschicht auf dem Trägermaterial erreicht werden kann. Zum Zwecke der Verankerungsverbesserung auf Permanentträgermaterialien kann auch die Klebemasse physikalisch vorbehandelt werden (Corona, Flamme, Plasma). Vliese werden bevorzugt. Das Flächengewicht der Vliese beträgt bevorzugt zwischen 4 und 100 g/$m^2$, besonders bevorzugt zwischen 10 und 70 g/$m^2$. Die Dicke dieser Vliese beträgt bevorzugt zwischen 20 und 100 μm, äußerst bevorzugt zwischen 30 und 60 μm.
Reaktivklebebänder mit Permanentträger können auf der Ober- und Unterseite verschieden dicke härtbare Klebemasseschichten und/oder bevorzugt härtbare Klebemasseschichten unterschiedlicher Art tragen. Kommen verschiedene härtbare Klebemasseschichten zum Einsatz dann enthalten insbesondere beide zumindest ein hier offenbartes (Co)Polymer.
Reaktivklebebänder enthaltend zumindest eine Schicht einer härtbaren Klebemasse mit einem hier offenbarten (Co)Polymer können auch in zwei- oder mehrschichtiger und permanentträgerfreier Form zum Einsatz kommen. Bevorzugt die oberste und sehr bevorzugt auch die unterste Schicht sind eine Schicht aus härtbarer Klebemasse mit hier offenbartem (Co)Polymer, wobei diese verschieden im Hinblick auf Dicke und/oder Art sein können. Kommen verschiedene härtbare Klebefilmschichten zum Einsatz, dann erfüllen insbesondere beide die Ausführungen zu erfindungsgemäßen härtbaren Klebemassen. Bei mehrschichtigen Reaktivklebebändern mit oder ohne Permanentträger sind prinzipiell auch solche Ausführungen möglich, die auf der Oberseite die erfindungsgemäße härtbare Klebemasse aufweisen und auf der Unterseite eine Schicht eines anderen Klebers, wie beispielsweise einer Haftklebemasse oder eines Schmelzklebers.
Mehrschichtige und permanentträgerhaltige Reaktivklebebänder können Dicken von 30 μm bis 1000 μm, bevorzugt von 75 μm bis 300 μm aufweisen.
Das Reaktivklebeband kann bahnförmig als Rollenware, als Blattware oder als Stanzling konfektioniert sein und so zum Aufbau des Verbunds genutzt werden. Die Reaktivklebebänder sind bevorzugt bei Raumtemperatur nicht haftklebrig, da das Material so sehr vorteilhaft auch ohne temporären Träger konfektioniert (zum Beispiel gestanzt) und

für den Weiterverarbeitungsprozess zur Verfügung gestellt werden kann. Eine haftklebrige Ausgestaltung ist jedoch auch denkbar und vorteilhaft.

Teil der Erfindung sind auch Verbünde umfassend ein erstes Verklebungssubstrat, ein zweites Verklebungssubstrat und dazwischen angeordnet ein erfindungsgemäßes Reaktivklebeband enthaltend zumindest eine Schicht eines hier offenbarten epoxidfunktionalisierten (Co)Polymers. In dem finalen Verbund liegt das Reaktivklebeband im gehärteten Zustand vor. Exemplarisch sei eine typische Herstellmöglichkeit für solche Verbünde unter Nutzung erfindungsgemäßer Reaktivklebebänder aufgeführt.

Im einfachsten Fall wird ein Stanzling des Reaktivklebebands ohne temporären Träger manuell, zum Beispiel mit Hilfe einer Pinzette, auf dem ersten Bauteil bzw. zwischen den zusammenzufügenden Bauteilen positioniert. In einer weiteren Ausführung wird der Stanzling des Reaktivklebebands nach der Positionierung auf dem ersten Bauteil mit einer Wärmequelle behandelt, wodurch sich die Haftung des Stanzlings zum ersten Bauteil erhöht. Dies geschieht bei der Laminiertemperatur. Im einfachsten Fall kann als Wärmequelle ein IR Strahler, ein Bügeleisen oder eine Heizplatte eingesetzt werden. Für diesen Prozess ist es von Vorteil, wenn der Stanzling noch mit einem temporären Trägermaterial ausgestattet ist, um ein Anhaften des Klebefilms am Werkzeug bzw. der Wärmequelle zu verhindern.

In einer weiteren vorteilhaften Ausgestaltung wird das erste Bauteil auf den Stanzling des Reaktivklebebands platziert. Die Platzierung erfolgt auf der offenen Seite. Auf der Rückseite befindet sich noch das temporäre Trägermaterial. Anschließend wird durch eine Wärmequelle Wärme durch das erste Bauteil in das Reaktivklebeband eingebracht. Dies erfolgt bei der Laminiertemperatur. Dadurch wird der Klebefilm tackig, d.h. klebrig, und haftet stärker am ersten Bauteil als an dem temporären Träger. Es wird durch das erste Bauteil geheizt.

Für die Einbringung der Wärme wird in einer bevorzugten Auslegung eine Heizpresse eingesetzt. Der Stempel der Heizpresse ist dabei zum Beispiel aus Aluminium, Messing oder Bronze gefertigt und wird in seiner Ausformung in der Regel den Konturen des Bauteils bzw. den Dimensionen des Stanzlings angepasst. Um eine genaue Positionierung des Stanzlings auf dem ersten Bauteil zu gewährleisten, werden in der Regel Formteile eingesetzt, die den Konturen der zu verklebenden Bauteile angepasst sind, wodurch Verrutschungen verhindert werden. Durch Führungsstifte im Formteil und entsprechende Führungslöcher im temporären Trägermaterial des Reaktivklebebands kann die exakte Positionierung zwischen Stanzling und erstem Bauteil sichergestellt werden. Andere Positionierungsmöglichkeiten sind denkbar. Nach der Wärmeaktivierung wird das erste Bauteil mit dem auflaminierten Klebefilm vom Formteil entfernt. Der gesamte Prozess kann auch in einen automatischen Prozess überführt werden.

Das Verfahren zur Herstellung eines erfindungsgemäßen Verbunds betrifft daher auch den Teilprozess umfassend die folgenden Schritte:

a) Fixieren des ersten Bauteils (Substrats) auf einem Formbauteil (einer Halterung);
b) Platzieren des zu verklebenden zweiten Bauteils (Substrats) mit einem Reaktivklebeband mit mindestens einer erfindungsgemäßen härtbaren Klebemasseschicht auf dem zweiten Bauteil (Substrat);
c) Applizieren von Druck und Temperatur, insbesondere mittels eines Heizpressstempels;
d) Entfernen des verklebten Verbunds aus dem Formbauteil (der Halterung),

wobei zwischen Schritt c) und Schritt d) wahlweise noch eine Rückkühlung durchgeführt werden kann. In Schritt c) werden Druck und Temperatur appliziert. Bei dieser Temperatur handelt es sich um die Aktivierungstemperatur. Dies erfolgt durch einen Heizstempel, der aus einem Material mit guter thermischer Leitfähigkeit besteht. Vorteilhafte Materialien sind zum Beispiel Kupfer, Messing, Bronze oder Aluminium. Es können aber auch andere Metalle oder Legierungen eingesetzt werden. Des Weiteren sollte der Heizpressstempel bevorzugt die Form der Oberseite des einen Bauteils einnehmen. Diese Form kann wiederum 2-dimensionaler oder 3-dimensionaler Natur sein. Der Druck wird vorteilhafter Weise über einen Pneumatikzylinder aufgebracht. Die Applizierung muss aber nicht unbedingt über Luftdruck erfolgen. Auch sind zum Beispiel hydraulische Pressvorrichtungen oder elektromechanische Stellantriebe zum Beispiel über Spindeln möglich. Des Weiteren kann es von Vorteil sein, mehrfach Druck und Temperatur einzubringen, um zum Beispiel durch Reihenschaltung oder Rotationsprinzip den Prozessdurchsatz zu erhöhen. Die Heizpressstempel müssen in diesem Fall nicht alle mit der gleichen Temperatur und/ oder gleichem Druck betrieben werden. Weiterhin können auch die Kontaktzeiten der Stempel unterschiedlich gewählt werden. Anstelle der Aktivierungstemperatur oder in Kombination mit einer Aktivierungstemperatur oder einer anderen Temperatur kann auch (UV) Strahlung zur Aktivierung genutzt werden.

Für die Klebeprodukte basierend auf den beschriebenen Klebesystemen sind vielfältige Verwendungen denkbar, von denen nur eine Auswahl zu Beispielzwecken und die nicht einschränkend zu verstehen sind hier genannt werden können: thermisch härtbare Reaktivklebebänder (zum Beispiel für hochfeste Bauteilverklebungen), UV-härtbare Reaktivklebebänder (zum Beispiel für hochfeste Bauteilverklebungen), thermisch härtbare Siegelklebebänder, UV-härtbare Siegelklebebänder. Da die Klebesysteme auf Poly(meth)acrylaten basieren, lassen sich Klebesysteme in hoher optischer Qualität erzeugen und entsprechend Verklebungsaufgaben, bei denen solche Anforderungen erfüllt werden müssen, bedienen.

***Experimenteller Teil***

***Testmethoden***

Test A - Ausquetschen (Oozing).

Der Oozing-Test ermöglicht Aussagen über das Ausquetschverhalten der Klebmasse (siehe auch Figur 1). Zur Durchführung vergleiche auch Fig. 1a und 1b. Dazu wird ein kreisförmiges Substrat (1) aus Polycarbonat mit Durchmesser 21 mm mit dem zu untersuchenden Klebefilm (3) auf einem zweiten Substrat (2) aus anodisiertem Aluminium verklebt. Das zweite Substrat weist eine kreisförmige Bohrung mit Durchmesser 9 mm auf, das erste Substrat wurde zentriert mit dem Klebeprodukt über dieser Bohrung appliziert. Das Klebeprodukt (3) (als Transferklebebandmuster) hat ebenfalls einen Durchmesser von 21 mm und eine Dicke von 100 μm und wurde entsprechend zugeschnitten oder gestanzt.
Es wurde ein Verbund aus dem Substrat (1) (Polycarbonat; Macrolon 099) und Substrat (2) (anodisiertes Aluminium; E6EV1) untersucht. Substrat (1) hat eine Dicke von 1,0 mm und Substrat (2) hat eine Dicke von 3,0 mm.
Das Klebeprodukt / der Klebefilm wird bei 70 °C auf Substrat (1) vorlaminiert und der Verbund (Substrat (1) und Klebeprodukt (3)) anschließend auf Substrat (2) vorlaminiert. Die Gesamtzeit der Temperatureinwirkung (70 °C) im Vorlaminierprozess darf 30 s nicht überschreiten. Anschließend wird der Gesamtverbund unter Druck und Temperatureinwirkung verpresst. Temperatur, Druck und Verpresszeit sind mit den Ergebnissen zu vermerken. Als Verpressbedingungen wurden 180°C, 12 sec, 10 bar gewählt.
Nach dem Verpressen wurde das Ausquetschverhalten des Klebefilms bestimmt. Gemessen wird in vier rechtwinklig aufeinander stehenden Positionen "Nord", "Ost", "Süd" und "West" jeweils in radialer Richtung bezogen auf das kreisrunde Polycarbonat-Substrat der maximale Abstand A vom Rand des Polycarbonat-Substrats bis zum äußersten Rand der ausgequetschten Masse (Oz) auf der entsprechenden Seite mit einer Präsizionsskalenlupe mit einer 1/10 mm Skalenteilung Das Ergebnis war der Mittelwert aus den vier Einzelmessungen. Für viele Anwendungen wird eine möglichst geringe Ausquetschungsneigung verlangt. Oozing nach der vorliegenden Testmethodik liegt bei höchstens 1,5 mm, bevorzugt bei 0 mm.

Test B - Molekulargewicht, GPC.

Die Bestimmung von Molmassen erfolgt an 100 μL klarfiltrierter Probe (Probenkonzentration 1,5 g/L). Als Eluent wird Tetrahydrofuran mit 0,1 Vol.-% Trifluoressigsäure eingesetzt, als interner Standard 200 ppm (m/V) Toluol. Die Messung erfolgt bei 25°C.
Als Vorsäule wird eine Säule Typ PSS - SDV, 10 μm, ID 8.0 mm × 50 mm (Angaben hier und im Folgenden in der Reihenfolge: Typ, Partikelgröße, Innendurchmesser × Länge) verwendet. Zur Auftrennung wird eine Säule des Typs PSS - SDV, 10 μm linear one, ID 8.0 mm × 300 mm eingesetzt (Säulen und Detektor der Firma Polymer Standards Service; Detektion mittels Detektor PSS-SECcurity 1260 RID). Die Durchflussmenge beträgt 0,5 mL pro Minute. Die Kalibration wird mit Polystyrol-Standards im Trennbereich der Säule durchgeführt und unter Nutzung der bekannten Mark Houwink Koeffizienten a und K universell in eine Polymethylmethacrylat-Kalibrierung umgerechnet.

Test C - Glasübergangstemperatur (DSC)

Die Bestimmung der Glasübergangstemperatur ($T_G$) erfolgt mittels dynamischer Differenzkalorimetrie (DSC; englisch Differential Scanning Calorimetry) an einem DSC 204 F1 der Firma Netzsch. Die Probe wird in verstärkte Aluminium-Tiegel (Deckel manuell gelocht) eingewogen. Das Temperaturprogramm fährt zwei Aufheizrampen, zuerst wird von 25 °C auf - 100 °C mit flüssigem Stickstoff heruntergekühlt und mit 10 K/min auf 180 °C aufgeheizt. Glasübergänge werden als Stufen im Thermogramm erkannt. Die Glasübergangstemperatur wird folgendermaßen ausgewertet (siehe dazu Figur 2). An die Basislinie des Thermogramms vor 1 und nach 2 der Stufe wird jeweils eine Tangente angelegt. Im Bereich der Stufe wird eine Ausgleichsgerade 3 parallel zur Ordinate so gelegt, dass sie die beiden Tangenten schneidet und zwar so, dass zwei Flächen 4 und 5 (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur. Anschließend wird wieder auf -100 °C heruntergekühlt und mit 10 K/min auf 250 °C aufgeheizt. Es werden die erste und die zweite Aufheizrampe ausgewertet. Die so ermittelte Glasübergangstemperatur der ersten Aufheizkurve entspricht der Glasübergangstemperatur des unvernetzten Polymers. Die ermittelte Glasübergangstemperatur resultierend aus der zweiten Aufheizkurve entspricht einer, durch die thermische Beanspruchung der Messung vernetzten Glasübergangstemperatur des Polymers bzw. einer durch die Aktivierung eines thermischen Vernetzer / Initiators vernetzten Polymers bzw. Formulierung, im Falle der Anwesenheit eines solchen in einem Polymer bzw. einer Formulierung. Auch für nicht reaktive Systeme lässt sich die Glastemperatur auf diese Weise bestimmen. Es wird dann als Ergebnis die Stufe in der zweiten Heizkurve ausgewertet.

Test D - Aktivierungstemperatur (DSC)

Die für die thermische Härtung der kationisch härtbaren Reaktivharze erforderliche Aktivierungstemperatur wird über Differential Scanning Calorimetry (DSC) bestimmt. Die Muster werden in Al-Tiegeln mit gelochtem Deckel und Stickstoffatmosphäre vermessen. Um ein gutes Bedecken des Tiegelbodens mit der Probe zu erreichen, wird das Muster im Gerät zunächst auf 40 °C aufgeheizt und wieder auf 25 °C abgekühlt. Die eigentliche Messung wird bei 25 °C gestartet, die Aufheizkurve läuft mit einer Heizrate von 10 K/min. Die erste Aufheizkurve wird ausgewertet. Das Anspringen der thermisch initiierten Härtungsreaktion wird von der Messapparatur durch die damit verbundene frei werdende Reaktionsenthalpie registriert und als exothermes Signal (Peak) im Thermogramm angezeigt. Als Aktivierungstemperatur wird diejenige Temperatur dieses Signals verwendet, bei der die Messkurve von der Basislinie abzuweichen beginnt (als ein Hilfsmittel, um diesen Punkt zu finden, kann die erste Ableitung des Thermogramms dienen; der Beginn der Reaktion kann mit dem Punkt im Thermogramm in Verbindung gebracht werden, bei dem die Differenz der ersten Ableitung des Peaks im Onsetbereich und der ersten Ableitung der Basislinie des Thermogramms einen Betrag von 0,01 mW/(K min) annimmt; sind exotherme Signal im Diagramm nach oben dargestellt, dann ist das Vorzeichen positiv, sind sie nach unten dargestellt, dann ist das Vorzeichen negativ). Es wird zudem das Integral, normiert auf die eingewogene Mustermenge, notiert.

Test E - Ausstoßfestigkeit (Push-out)

Der Push-Out-Test ermöglicht Aussagen über die Verklebungsfestigkeit eines Klebeprodukts in Richtung der Klebschichtnormalen. Dazu wird ein kreisförmiges Substrat (1) mit Durchmesser 21 mm mit dem zu untersuchenden Klebefilm auf einem zweiten Substrat (1 oder 2) verklebt. Das zweite Substrat weist eine kreisförmige Bohrung mit Durchmesser 9 mm auf, das erste Substrat wurde zentriert mit dem Klebeprodukt über dieser Bohrung appliziert. Das Klebeprodukt hat ebenfalls einen Durchmesser von 21 mm und wurde entsprechend zugeschnitten oder gestanzt.

Es wurde ein Verbund aus dem Substrat (1) (Polycarbonat; Macrolon 099) und Substrat (2) (anodisiertes Aluminium; E6EV1) untersucht. Substrat (1) hat eine Dicke von 1,0 mm und Substrat (2) hat eine Dicke von 3,0 mm.

Das Klebeprodukt / der Klebefilm wird bei 70 °C auf Substrat (1) vorlaminiert und der Verbund (Substrat (1) und Klebeprodukt) anschließend auf Substrat (2) vorlaminiert. Die Gesamtzeit der Temperatureinwirkung (70 °C) im Vorlaminierprozess darf 30 s nicht überschreiten. Anschließend wird der Gesamtverbund unter Druck und Temperatureinwirkung verpresst. Temperatur, Druck und Verpresszeit sind mit den Ergebnissen zu vermerken. Als Verpressbedingungen wurden 180°C, 12 sec, 10 bar gewählt.

Mittels eines zylindrischen Stempels (Durchmesser 7 mm), der in eine Zugprüfmaschine eingespannt ist, wird durch das Loch in Substrat (2) auf den Verbund (Substrat (1) und Klebeprodukt) gedrückt und so eine Kraft auf die Klebefuge im Verbund ausgeübt. Substrat (2) wird derart in der Zugprüfmaschine fixiert, dass eine möglichst allseitige, flächige Auflage / Fixierung gewährleistet ist, wobei Substrat (1) frei durch den Stempel herausgedrückt werden kann. Die Prüfgeschwindigkeit liegt bei 10 mm/s. Aufgenommen wird diejenige Kraft, bei der die Verklebung versagt und Substrat (1) von Substrat (2) gelöst wird. Die Kraft wird auf die Verklebungsfläche (282 $mm^2$) bezogen, so dass Push-Out-Festigkeiten in Einheiten von $N/mm^2$ resultieren. Das Prüfklima ist 23 °C und 50 % relative Feuchtigkeit, die Prüfkörper werden nach dem Verpressen 48 h im Prüfklima gelagert. Die Ergebnisse sind Mittelwerte aus drei Einzelprüfungen und werden in $N/mm^2$ angegeben. In vielen Anwendungen werden hohe Verklebungsfestigkeiten gefordert. Ein Anhaltspunkt für gute Verklebungsfestigkeit nach dem vorliegenden Test sind mindestens 2 $N/mm^2$, für sehr gute mindestens 4,0 $N/mm^2$.

***Beispiele***

Eingesetzte Rohstoffe:

| | | |
|---|---|---|
| Vazo® 52 | 2,2-Azobis(2,4-dimethylvaleronitril) | Fa. DuPont |
| TTA15 | 3,4-Epoxycyclohexylmethylmethacrylat | Fa. Tetrachem |
| K-Pure® CXC 1614 | thermischer Aktivator auf Basis eines quartären Ammoniumsalzes der Trifluoromethansulfonsäure | Fa. King Industries |
| Desmomelt® 530 | Polyurethan | Fa. Covestro |
| Uvacure 1500 | (3',4'-Epoxycyclohexan)-methyl-(3,4-epoxy-cyclohexyl)-carboxylat | Fa. Allnex |

Herstellung der Klebemassen und Reaktivklebebandmuster:

Beispiel A

Ein für radikalische Polymerisationen konventioneller, druckfester 2 L-Polymerisationsreaktor wurde mit 100 g 3,4-Epoxycyclohexylmethylmethacrylat und 396 g Methylethylketon gefüllt. Nach 45 Minuten Durchleiten von Stickstoffgas unter Rühren wurde der Reaktor auf 70 °C Produkttemperatur hochgeheizt und bis zum Sieden evakuiert. Anschließend wurden 2,0 g 2,2-Azobis(2,4-dimethylvaleronitril) gelöst in 4,0 g Methylethylketon hinzugegeben. Die Reaktion wird bei konstanten 70 °C Produkttemperatur unter Siedekühlung durchgeführt. Nach 1 h Reaktionszeit wurden auf 70 °C vortemperierte und für 45 Minuten mit Stickstoff durchleitete 100 g 3,4-Epoxycyclohexylmethylmethacrylat hinzugegeben und 2,0 g 2,2-Azobis(2,4-dimethylvaleronitril) gelöst in 4,0 g Methylethylketon hinzugegeben. Nach 2 h Reaktionszeit wurden auf 70 °C vortemperierte und für 45 Minuten mit Stickstoff durchleitete 100 g 3,4-Epoxycyclohexylmethylmethacrylat hinzugegeben und 2,0 g 2,2-Azobis(2,4-dimethylvaleronitril) gelöst in 4,0 g Methylethylketon hinzugegeben.. Nach 3 h Reaktionszeit wurden auf 70 °C vortemperierte und für 45 Minuten mit Stickstoff durchleitete 100 g 3,4-Epoxycyclohexylmethylmethacrylat hinzugegeben und 2,0 g 2,2-Azobis(2,4-dimethylvaleronitril) gelöst in 4,0 g Methylethylketon hinzugegeben. Die Reaktion wurde nach 24 h Reaktionszeit abgebrochen und auf Raumtemperatur abgekühlt.

Die Molmasse des resultierenden Polymers betrug 15 900 g/mol.

Die Glasübergangstemperatur des ungehärteten Polymers betrug 32 °C, ermittelt aus der ersten Aufheizkurve nach Test C. Das durch Selbsthärtung während der Heizphase im DSC-Experiment erzeugte Material wies in der zweiten Heizkurve eine Glasübergangstemperatur von 72 °C auf.

Beispiel B

Ein für radikalische Polymerisationen konventioneller, druckfester 2 L-Polymerisationsreaktor wurde mit 400 g 3,4-Epoxycyclohexylmethylmethacrylat, 420 g Isopropanol und 726 g Methylethylketon gefüllt. Nach 45 Minuten Durchleiten von Stickstoffgas unter Rühren wurde der Reaktor auf 65 °C Produkttemperatur hochgeheizt und bis zum Sieden evakuiert. Anschließend wurden 4,0 g 2,2-Azobis(2,4-dimethylvaleronitril) gelöst in 8,0 g Methylethylketon hinzugegeben. Die Reaktion wird bei konstanten 65 °C Produkttemperatur unter Siedekühlung durchgeführt. Nach 7 h Reaktionszeit wurden 4,0 g 2,2-Azobis(2,4-dimethylvaleronitril) gelöst in 8,0 g Methylethylketon hinzugegeben. Die Reaktion wurde nach 24 h Reaktionszeit abgebrochen und auf Raumtemperatur abgekühlt.

Die Molmasse des resultierenden Polymers betrug 25 900 g/mol.

Die Glasübergangstemperatur des ungehärteten Polymers betrug 34 °C, ermittelt aus der ersten Aufheizkurve nach Test C. Das durch Selbsthärtung während der Heizphase im DSC-Experiment erzeugte Material wies in der zweiten Heizkurve eine Glasübergangstemperatur von 68 °C auf.

Beispiel C

Ein für radikalische Polymerisationen konventioneller, druckfester 2 L-Polymerisationsreaktor wurde mit 400 g 3,4-Epoxycyclohexylmethylmethacrylat, 420 g Isopropanol und 150 g Methylethylketon gefüllt. Nach 45 Minuten Durchleiten von Stickstoffgas unter Rühren wurde der Reaktor auf 65 °C Produkttemperatur hochgeheizt und bis zum Sieden evakuiert. Anschließend wurden 1,6 g 2,2-Azobis(2,4-dimethylvaleronitril) gelöst in 30,4 g Isopropanol hinzugegeben. Die Reaktion wird bei konstanten 65 °C Produkttemperatur unter Siedekühlung durchgeführt. Nach 7 h Reaktionszeit wurden 1,6 g 2,2-Azobis(2,4-dimethylvaleronitril) gelöst in 30,4 g Isopropanol hinzugegeben. Nach 14 Stunden Reaktionszeit wurde mit 100 g Methylethylketon verdünnt. Die Reaktion wurde nach 24 h Reaktionszeit abgebrochen und auf Raumtemperatur abgekühlt.

Die Molmasse des resultierenden Polymers betrug 30 600 g/mol.

Die Glasübergangstemperatur des ungehärteten Polymers betrug 38 °C, ermittelt aus der ersten Aufheizkurve nach Test C. Das durch Selbsthärtung während der Heizphase im DSC-Experiment erzeugte Material wies in der zweiten Heizkurve eine Glasübergangstemperatur von 70 °C auf.

Beispiele E

Für die Herstellung der Reaktivklebebandmuster (Beispiele E1 und E2, Vergleichsbeispiel V1) wurden alle jeweils erforderlichen Formulierungsbestandteile in Lösungsmittel aufgelöst bzw. etwaige unlösliche Bestandteile wie anorganische Füllstoffe mit einer Dispergierscheibe suspendiert und als Lösung bzw. Suspension beschichtet. Der Lösemittelgehalt in den Lösungen betrug 80 Gew.-%. Als Lösemittel wurde Methylethylketon verwendet. Die Beschichtung erfolgte auf einem silikonisierten Trennpapier. Beschichtete und getrocknete Muster wurden für 30 min bei 50 °C

getrocknet. Nach der Trocknung betrug die Klebeschichtdicke der Ausstriche 100 μm (im Rahmen der üblichen Fehlertoleranzen). Nach 24 h wurden die Reaktivklebebandmuster zu Prüfkörpern verarbeitet und diese dann nach weiteren 48 h vermessen. Details zu den Prüfkörpern sind in den jeweiligen Testmethoden zu finden.

Beispiel E1 - Reaktivklebeband thermisch härtbar

9,7 Gew. % Polymer aus Beispiel A wurden mit 90 Gew.-% Desmomelt 530 als Filmbildner (B) und 0,3 Gew.-% K-Pure CXC 1614 als Härter (A) versetzt. Für die resultierenden Reaktivklebebänder wurde die Verklebungsfestigkeit (Ausstoßfestigkeit nach Test E) und die Ausquetschneigung im Verpressschritt (Test A) untersucht. Die Ausstoßfestigkeit betrug 5,5 $N/mm^2$ und die Ausquetschneigung 0 mm.

Beispiel E2 - Reaktivklebeband thermisch härtbar

49,7 Gew. % Polymer aus Beispiel A wurden mit 50 Gew.-% Desmomelt 530 als Filmbildner (B) und 0,3 Gew.-% K-Pure CXC 1614 als Härter (A) versetzt. Für die resultierenden Reaktivklebebänder wurde die Verklebungsfestigkeit (Ausstoßfestigkeit nach Test E) und die Ausquetschneigung im Verpressschritt (Test A) untersucht. Die Ausstoßfestigkeit betrug 2,2 $N/mm^2$ und die Ausquetschneigung 1,4 mm.

Vergleichsbeispiel V1 - Reaktivklebeband thermisch härtbar

9,7 Gew. % Uvacure 1500 (niedermolekulares cycloaliphatisches Diepoxid) wurden mit 90 Gew.-% Desmomelt 530 als Filmbildner (B) und 0,3 Gew.-% K-Pure CXC 1614 als Härter (A) versetzt. Die Formulierung enthielt kein erfindungsgemäßes (Co)Polymer. Für die resultierenden Reaktivklebebänder wurde die Verklebungsfestigkeit (Ausstoßfestigkeit nach Test E) und die Ausquetschneigung im Verpressschritt (Test A) untersucht. Die Ausstoßfestigkeit betrug 2,5 $N/mm^2$ und die Ausquetschneigung > 1,5 mm.

Aus den Beispielen und dem Vergleichsbeispiel ist ersichtlich, dass hier offenbarte epoxidfunktionalisierte (Co)Polymere vorteilhaft in härtbaren Klebemassen genutzt werden können. Es werden mit diesen (Co)Polymeren Verklebungsfestigkeiten entsprechend der gestellten Aufgabe erreicht. Die Ausquetschneigung liegt in einem günstigen Beriech. Kommt an Stelle des hier offenbarten epoxidfunktionalisierten (Co)Polymers ein niedermolekulares Reaktivharz nach dem Stand der Technik zum Einsatz (Uvacure 1500), dann werden die Anforderungen an geringe Ausquetschneigung nicht erfüllt.

## Patentansprüche

**1.** Reaktivklebemasse, umfassend

- ein Polymer erhältlich durch radikalische Polymerisation zumindest eines Monomers, nämlich eines oder mehrerer (Meth)Acrylatmonomere und gegebenenfalls zusätzlich vinylischer Comonomere,
  - wobei das Polymer eine Molmasse $M_w$ (GPC) von mindestens 5 000 g/mol und höchstens 200 000 g/mol aufweist
  - und zumindest eines der Monomere mit zumindest einer Epoxy-Gruppe funktionalisiert ist,
- sowie zumindest einen Initiator für eine Härtungsreaktion unter Beteiligung des Polymers,

**dadurch gekennzeichnet, dass**
der Anteil des bzw. der epoxidfunktionalisierten Monomere (a) mehr als 30 Gew.-%, bezogen auf die Gesamtheit der dem epoxidfunktionalisierten (Co)Polymer zugrundeliegenden Monomere, beträgt.

**2.** Reaktivklebemasse nach Anspruch 1, **dadurch gekennzeichnet, dass** die Molmasse $M_w$ (GPC) des Polymers mindestens 10 000 g/mol, bevorzugt mindestens 20 000 g/mol ist.

**3.** Reaktivklebemasse nach einem der Ansprüche 1 oder 2, **dadurch gekennzeichnet, dass** die Molmasse $M_w$ (GPC) des Polymers höchstens 150 000 g/mol, bevorzugt höchstens 100 000 g/mol ist.

**4.** Reaktivklebemasse nach einem der vorangehenden Ansprüche, dadurch gezeichnet, dass alle oder einige der Sauerstoffatome der Epoxy-Gruppen in zumindest einem Teil der epoxidfunktionalisierten Monomere eine aliphatische C-C-Bindung überbrücken (aliphatische Epoxygruppe).

**5.** Reaktivklebemasse nach einem der vorangehenden Ansprüche, **dadurch gekennzeichnet, dass** alle oder einige der Sauerstoffatome der Epoxy-Gruppen in zumindest einem ein Teil der epoxidfunktionalisierten Monomere eine C-C-Bindung überbrücken, die Bestandteil eines - gegebenenfalls heterosubstituierten - aliphatischen Kohlenwasserstoffrings ist (cycloaliphatische Epoxygruppe).

**6.** Reaktivklebemasse nach einem der vorangehenden Ansprüche, **dadurch gekennzeichnet, dass** die Glasübergangstemperatur (DSC) des Polymers in unvernetztem Zustand oberhalb von 0 °C, bevorzugt oberhalb von 25 °C, sehr bevorzugt oberhalb von 35 °C liegt.

**7.** Reaktivklebemasse nach einem der vorangehenden Ansprüche, **dadurch gekennzeichnet, dass** die Glasübergangstemperatur (DSC) des Polymers in unvernetztem Zustand unterhalb von 120 °C, bevorzugt unterhalb von 100 °C, sehr bevorzugt unterhalb von 80 °C liegt.

**8.** Reaktivklebemasse nach einem der vorangehenden Ansprüche, **dadurch gekennzeichnet, dass** zumindest eines der Monomere ein hartes Monomer derart ist, dass das Homopolymer aus diesem Monomer im molekulargewichtsunabhängigen Bereich eine Glasübergangstemperatur (DSC) von mindestens 25 °C, insbesondere von mindestens 50 °C, aufweist.

**9.** Reaktivklebemasse nach einem der vorangehenden Ansprüche, **dadurch gekennzeichnet, dass** zumindest eines der Monomere ein weiches Monomer derart ist, dass das Homopolymer aus diesem Monomer im molekulargewichtsunabhängigen Bereich eine Glasübergangstemperatur (DSC) von weniger als 25 °C, insbesondere von höchstens 0 °C, aufweist.

**10.** Reaktivklebemasse nach einem der vorangehenden Ansprüche, **dadurch gekennzeichnet, dass** zumindest eines der Monomere eine oder mehrere andere Funktionalitäten trägt, also solche Funktionalität, die keine Epoxy-Gruppe ist.

**11.** Reaktivklebemasse nach Anspruch 10, **dadurch gekennzeichnet, dass** zumindest eine der anderen Funktionalitäten eine Silizium-haltige Gruppe ist.

**12.** Reaktivklebemasse nach einem der Ansprüche 10 oder 11, **dadurch gekennzeichnet, dass** der Anteil an Monomeren mit anderen Funktionalitäten bis zu 10 Gew.-%, bevorzugt von bis zu 5 Gew.-%, beträgt.

## Claims

**1.** Reactive adhesive composition comprising

- a polymer obtainable by free-radical polymerization of at least one monomer, namely one or more (meth)acrylate monomers and optionally additionally vinylic comonomers,

  - where the polymer has a molar mass Mw (GPC) of at least 5000 g/mol and at most 200 000 g/mol
  - and at least one of the monomers has been functionalized with at least one epoxy group,

- and at least one initiator for a curing reaction involving the polymer,

**characterized in that**
the proportion of the epoxy-functionalized monomer(s) (a) is more than 30% by weight, based on the entirety of the parent monomers of the epoxy-functionalized (co)polymer.

**2.** Reactive adhesive composition according to Claim 1, **characterized in that** the molar mass Mw (GPC) of the polymer is at least 10 000 g/mol, preferably at least 20 000 g/mol.

**3.** Reactive adhesive composition according to Claim 1 or 2, **characterized in that** the molar mass Mw (GPC) of the polymer is at most 150 000 g/mol, preferably at most 100 000 g/mol.

4. Reactive adhesive composition according to any of the preceding claims, **characterized in that** all or some of the oxygen atoms in the epoxy groups bridge an aliphatic C-C bond (aliphatic epoxy group) in at least some of the epoxy-functionalized monomers.

5. Reactive adhesive composition according to any of the preceding claims, **characterized in that** all or some of the oxygen atoms in the epoxy groups in at least some of the epoxy-functionalized monomers bridge a C-C bond that is part of an optionally hetero-substituted aliphatic hydrocarbon ring (cycloaliphatic epoxy group).

6. Reactive adhesive composition according to any of the preceding claims, **characterized in that** the glass transition temperature (DSC) of the polymer in the uncrosslinked state is above 0°C, preferably above 25°C, very preferably above 35°C.

7. Reactive adhesive composition according to any of the preceding claims, **characterized in that** the glass transition temperature (DSC) of the polymer in the uncrosslinked state is below 120°C, preferably below 100°C, very preferably below 80°C.

8. Reactive adhesive composition according to any of the preceding claims, **characterized in that** at least one of the monomers is a hard monomer **in that** the homopolymer formed from this monomer, in the molecular weight-independent range, has a glass transition temperature (DSC) of at least 25°C, especially of at least 50°C.

9. Reactive adhesive composition according to any of the preceding claims, **characterized in that** at least one of the monomers is a soft monomer **in that** the homopolymer formed from this monomer, in the molecular weight-independent range, has a glass transition temperature (DSC) of less than 25°C, especially of at most 0°C.

10. Reactive adhesive composition according to any of the preceding claims, **characterized in that** at least one of the monomers bears one or more other functionalities, i.e. such a functionality that is not an epoxy group.

11. Reactive adhesive composition according to Claim 10, **characterized in that**
at least one of the other functionalities is a silicon-containing group.

12. Reactive adhesive composition according to either of Claims 10 and 11, **characterized in that** the proportion of monomers having other functionalities is up to 10% by weight, preferably up to 5% by weight.

## Revendications

1. Masse adhésive réactive comprenant

   • un polymère pouvant être obtenu par polymérisation radicalaire d'au moins un monomère, plus précisément d'un ou plusieurs (méth)acrylates monomères et éventuellement en outre de comonomères vinyliques,
   • le polymère présentant une masse moléculaire $M_w$ (CPG) d'au moins 5 000 g/mol et d'au plus 200 000 g/mol
   • et au moins l'un des monomères étant fonctionnalisé avec au moins un groupe époxy,
   • ainsi qu'au moins un amorceur pour une réaction de durcissement avec participation du polymère,

   **caractérisée en ce que**
   la proportion du ou des monomères (a) à fonctionnalité époxy est supérieure à 30 % en poids, par rapport à la totalité des monomères qui sont à la base du (co)polymère à fonctionnalité époxy.

2. Masse adhésive réactive selon la revendication 1, **caractérisée en ce que** la masse moléculaire $M_w$ (CPG) du polymère est d'au moins 10 000 g/mol, de préférence d'au moins 20 000 g/mol.

3. Masse adhésive réactive selon l'une des revendications 1 ou 2, **caractérisée en ce que** la masse moléculaire Mw (CPG) du polymère est d'au plus 150 000 g/mol, de préférence d'au plus 100 000 g/mol.

4. Masse adhésive réactive selon l'une des revendications précédentes, **caractérisée en ce que** la totalité ou quelques-uns des atomes d'oxygène des groupes époxy se trouvant dans au moins une partie des monomères à fonctionnalité époxy pontent une liaison C-C aliphatique (groupe époxy aliphatique).

**5.** Masse adhésive réactive selon l'une des revendications précédentes, **caractérisée en ce que** la totalité ou quelques-uns des atomes d'oxygène des groupes époxy dans au moins une partie des monomères à fonctionnalité époxy pontent une liaison C-C, qui est un constituant d'un cycle hydrocarboné aliphatique - éventuellement hétérosubstitué - (groupe époxy cycloaliphatique).

**6.** Masse adhésive réactive selon l'une des revendications précédentes, **caractérisée en ce que** la température de transition vitreuse (ACD) du polymère à l'état non réticulé est supérieure à 0 °C, de préférence supérieure à 25 °C, très préférentiellement supérieure à 35 °C.

**7.** Masse adhésive réactive selon l'une des revendications précédentes, **caractérisée en ce que** la température de transition vitreuse (ACD) du polymère à l'état non réticulé est inférieure à 120 °C, de préférence inférieure à 100 °C, très préférentiellement inférieure à 80 °C.

**8.** Masse adhésive réactive selon l'une des revendications précédentes, **caractérisée en ce que** au moins l'un des monomères est un monomère dur, tel que l'homopolymère de ce monomère, dans le domaine dépendant de la masse moléculaire, présente une température de transition vitreuse (ACD) d'au moins 25 °C, en particulier d'au moins 50 °C.

**9.** Masse adhésive réactive selon l'une des revendications précédentes, **caractérisée en ce que** au moins l'un des monomères est un monomère mou, tel que l'homopolymère de ce monomère dans le domaine dépendant de la masse moléculaire présente une température de transition vitreuse (ACD) inférieure à 25 °C, en particulier d'au plus 0 °C.

**10.** Masse adhésive réactive selon l'une des revendications précédentes, **caractérisée en ce que** au moins l'un des monomères porte une ou plusieurs autres fonctionnalités, à savoir une fonctionnalité qui ne contient pas de groupe époxy.

**11.** Masse adhésive réactive selon la revendication 10, **caractérisée en ce qu'**au moins l'une des autres fonctionnalités est un groupe contenant du silicium.

**12.** Masse adhésive réactive selon l'une des revendications 10 ou 11, **caractérisée en ce que** la proportion des monomères ayant d'autres fonctionnalités va jusqu'à 10 % en poids, de préférence jusqu'à 5 % en poids.

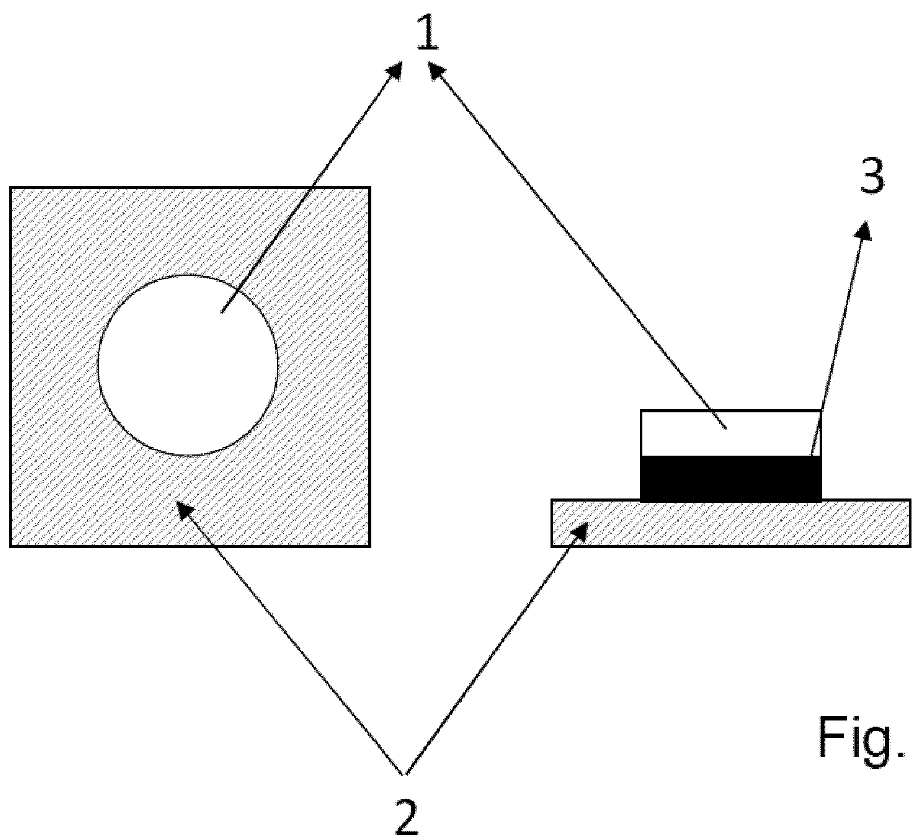


Fig. 1a

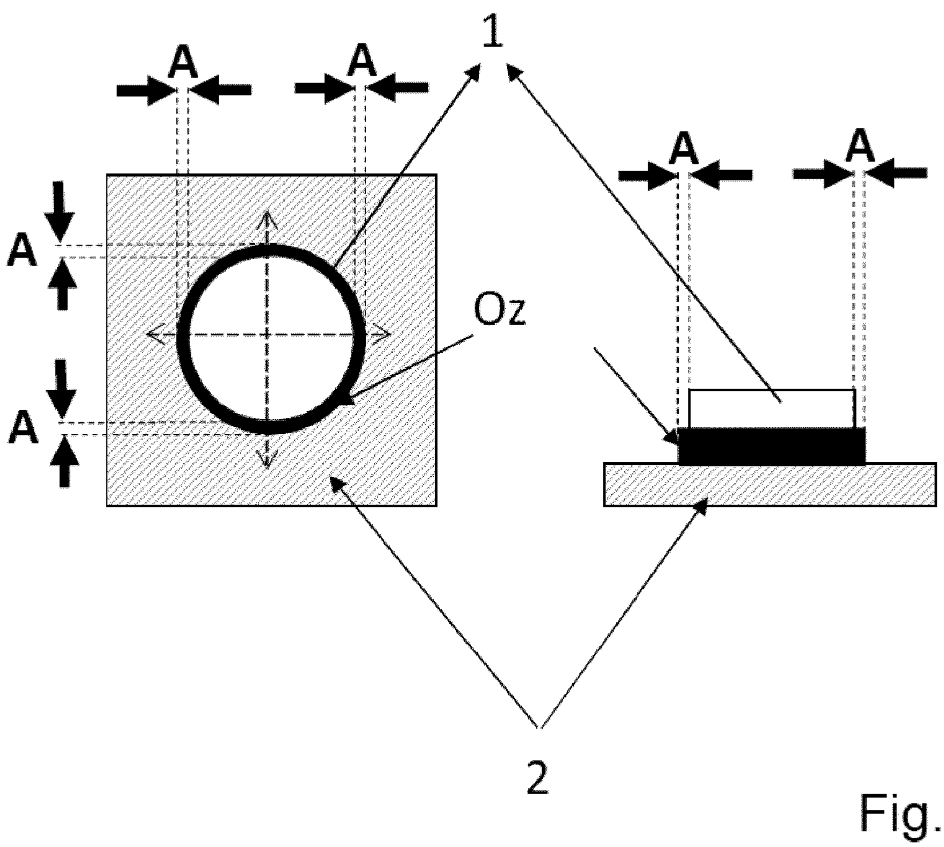


Fig. 1b

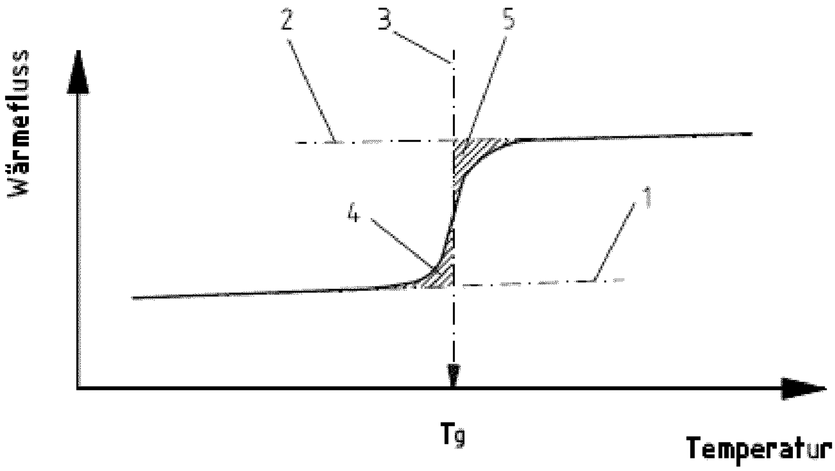


FIG. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1028151 B1
- EP 620259 A1
- EP 721975 A
- DE 19519499 A1
- WO 9821287 A1
- US 4552604 A
- EP 2545132 A1
- EP 819746 A1
- EP 914027 A1
- WO 2013101693 A1
- WO 2015048012 A1
- WO 1999057216 A1
- WO 2012165259 A1
- US 2002185222 A1
- WO 2015082143 A1
- WO 9624620 A1
- WO 9844008 A1
- DE 19949352 A1
- US 5945491 A
- US 5854364 A
- US 5789487 A
- WO 9801478 A1
- WO 9931144 A1
- US 20140367670 A1
- US 5242715 A
- EP 393893 A1
- WO 2013156509 A2
- JP 2014062057 A
- JP 2012056915 A
- US 6908722 B1
- US 4231951 A
- US 4256828 A
- US 4058401 A
- US 4138255 A
- US 2010063221 A1
- US 3729313 A
- US 3741769 A
- US 4250053 A
- US 4394403 A
- EP 542716 B1
- EP 894841 B1
- EP 1308492 B1


### In der Beschreibung aufgeführte Nicht-Patentliteratur


- **J. V. CRIVELLO.** *J. Polym. Sci. A Polym. Chem.,* 1999, vol. 37, 4241-54
- **U. W. GEDDE.** Polymer Physics. Kluwer, 1999, 70
- **T. FOX ; P. J. FLORY.** *J. Polym. Sci.,* 1954, vol. 14, 315-319
- Polymer Handbook. J. Wiley, 1999, vol. 1
- Polymer Handbook. J. Wiley, vol. 1
- **HOUBEN-WEYL.** *Methoden der Organischen Chemie,* vol. 19a, 60-147
- *Macromolecules,* 2000, vol. 33, 243-245
- *J. Polym. Sei. A,* 1995, vol. 33, 505ff
- *J. Polym. Sei. B,* 2001, vol. 39, 2397ff
- *Macromolecules,* 1990, vol. 23, 431ff
- *Macromolecules,* 1991, vol. 24, 2689
- *Macromol. Chem. Phys.,* 2001, vol. 202, 2554ff
- **C. DONKER.** *PSTC Annual Technical Proceedings,* Mai 2001, 149-164